# EUROPEAN PATENT SPECIFICATION

(11) **EP 4 163 350 B1**
(45) Date of publication and mention of the grant of the patent: **10.09.2025**
(21) Application number: 21818596.5
(22) Date of filing: 03.06.2021
(51) Int. Cl.: C09K 3/18, C08G 18/10, C08G 18/63, C08G 18/79, C08G 18/80, D06M 13/395, D06M 15/564, D06M 15/568, C08G 18/28, C08G 18/32, C08G 18/42, C08G 18/44, C08G 18/48, C08G 18/66, C08G 18/78, C08G 18/62, D06M 15/263, D06M 15/267, D06M 15/572, D06M 15/576, D06M 15/643

(54) **WATER REPELLENT COMPOSITION, KIT, WATER REPELLENT FIBER PRODUCT AND METHOD FOR MANUFACTURING SAME**
WASSERABWEISENDE ZUSAMMENSETZUNG, KIT, WASSERABWEISENDES FASERPRODUKT UND VERFAHREN ZUR HERSTELLUNG DAVON
COMPOSITION HYDROFUGE, KIT, PRODUIT FIBREUX HYDROFUGE ET PROCÉDÉ DE FABRICATION ASSOCIÉ

(30) Priority: 03.06.2020 JP 2020096856
(43) Date of publication of application: 12.04.2023
(73) Proprietor: MEISEI CHEMICAL WORKS, LTD., Kyoto-shi, Kyoto 615-8666 (JP)
(72) Inventor: MATSUMURA, Tatsuya, Kyoto-shi, Kyoto 615-8666 (JP); DAIDO, Naoki, Kyoto-shi, Kyoto 615-8666 (JP); NISHIMURA, Hiroshi, Kyoto-shi, Kyoto 615-8666 (JP); HASHIMOTO, Takafumi, Kyoto-shi, Kyoto 615-8666 (JP)
(74) Representative: Mewburn Ellis LLP
(86) International application number: PCT/JP2021/021154
(87) International publication number: WO 2021/246475

(56) References cited:
- EP-A1- 3 460 021
- WO-A1-2007/114302
- WO-A1-2011/122442
- WO-A1-2017/199726
- JP-A- 2010 229 593
- JP-A- 2013 155 459
- JP-A- 2018 062 720
- JP-A- 2019 026 965
- US-A- 5 508 370

## Description

### TECHNICAL FIELD

The present invention relates to a water repellent composition, a kit, a water repellent fiber product, and a method for manufacturing the water repellent fiber product. The invention is set out in the appended set of claims.

### BACKGROUND ART

Conventionally, when water repellency is imparted to a base material, a fluorine-based water repellent, particularly a C8 fluorine-based water repellent having a perfluoroalkyl group having 7 or more carbon atoms, has been used since excellent performance can be obtained with a small amount of the fluorine-based water repellent.

However, in recent years, the biotoxicity and environmental load of perfluorooctanesulfonic acid (PFOS) and perfluorooctanoic acid (PFOA) contained in the C8 fluorine-based water repellent have started to be regarded as a problem, and there has been a demand for the development of a water repellent not containing these acids or not decomposed to generate these acids in the environment.

Under such a background, development of a C6 fluorine-based water repellent having no perfluoroalkyl group having 7 or more carbon atoms and a fluorine-free water repellent not using a fluorine compound has been advanced. On the other hand, these water repellents have many problems, and for example, it is known that they are inferior in water repellency to the C8 fluorine-based water repellent. When a fiber product treated with such water repellents is assumed, a softener, a seam slipping prevention agent, and the like are used in combination in order to improve physical properties such as texture and seam slipping, but it is known that the combination use thereof causes a decrease in water repellency, and compatibility between water repellency and other physical properties is a problem. In the progress of switching from the C8 fluorine-based water repellent, improvement in choke mark among various physical properties is particularly problematic.

A choke mark is a phenomenon in which a color change occurs in a portion of a fiber product, for example, when the surface of the fiber product is rubbed or bent, and this is likely to cause a claim from a user, which is problematic.

As a method for improving the choke mark, for example, Patent Document 1 discloses a water repellent containing a silicon-containing polymer copolymerized with a non-fluorine (meth)acrylate monomer and a silicone macromer having a radically polymerizable group as essential components. However, in the method described in Patent Document 1, in order to improve the choke mark, it is necessary to use a silicone macromer having an expensive radically polymerizable group, and in order to obtain a high effect, it is necessary to increase the content of the silicone macromer in the polymer, which is disadvantageous in terms of cost, and thus this method is not practical. The effect is not sufficient.

Patent Document 2 describes that a chalk mark can be improved by using an alkyl-modified silicone having an alkyl group having 23 to 40 carbon atoms in combination with a fluorine-based water repellent or a fluorine-free water repellent, but the effect is not sufficient. Patent Document 3 concerns a water repellent treatment agent, which is an aqueous emulsion which contains no fluorine-containing ingredient and comprises a hybrid emulsion that contains a water repellent component and a crosslinking component capable of reacting with the water repellent component, the two components being included in each particle.

### PRIOR ART DOCUMENTS

### PATENT DOCUMENTS

Patent Document 1: Japanese Patent Laid-open Publication No. 2018-095879
Patent Document 2: WO 2019/163570 A1
Patent Document 3: EP 3460021 A1

### SUMMARY OF THE INVENTION

### PROBLEMS TO BE SOLVED BY THE INVENTION

A main object of the present invention is to provide a water repellent composition not containing a perfluoroalkyl group-containing compound having 7 or more carbon atoms and having excellent chalk mark resistance. Another object of the present invention is to provide a kit for preparing the water repellent composition, a water repellent fiber product using the water repellent composition, and a method for manufacturing the water repellent fiber product.

### MEANS FOR SOLVING THE PROBLEM

The present inventors have conducted intensive studies in order to solve the above problems. As a result, the present inventors have found that a water repellent composition is excellent in chalk mark resistance, the water repellent composition containing at least a reaction product (AB) of a polyol compound (A) and a polyisocyanate compound (B), and a water repellency-imparting compound (C), in which the polyol compound (A) is at least one of a polyol compound (A1) having one or more of at least one functional group selected from the group consisting of an ether group, a carbonate group, and an ester group and a polyol compound (A2) having none of the functional groups, the reaction product (AB) has an isocyanate group, when the polyol compound (A) includes only the polyol compound (A2) in the reaction product (AB), a molar ratio (B/A2) of the isocyanate group in the polyisocyanate compound (B) to the hydroxyl group in the polyol compound (A2) is 2.1 or more, the water repellency-imparting compound (C) has no perfluoroalkyl group having 7 or more carbon atoms, and a mass ratio (AB/C) of the reaction product (AB) to the water repellency-imparting compound (C) is 0.05 or more. The present inventors have conducted further studies based on the findings, leading to the completion of the present invention.

That is, the present invention is set out in the appended set of claims.

### ADVANTAGES OF THE INVENTION

According to the present invention, it is possible to provide a water repellent composition not containing a perfluoroalkyl group-containing compound having 7 or more carbon atoms and having excellent chalk mark resistance. The present invention can also provide a kit for preparing the water repellent composition, a water repellent fiber product using the water repellent composition, and a method for manufacturing the water repellent fiber product.

According to a preferred aspect of the present invention described below, in addition to the chalk mark resistance, deterioration of seam slippage and a decrease in adhesion to a coating agent can also be suppressed. As described below, examples of a coating agent applied to a water repellent fiber product include an acrylic resin and a urethane resin. The coating of the water repellent fiber product is performed, for example, for improving waterproofness (water resistance) and adjusting air permeability. For example, in the case of a windbreaker, water repellency can be imparted to a non-coated surface (outer side), and windproof properties can be imparted by filling the coated surface (inner side) with a coating agent (resin) between fibers. Similarly, when the inside of an umbrella is coated, water resistance is enhanced by filling. As described above, in the water repellent fiber product, an acrylic resin, a urethane resin (for example, a polycarbonate-based urethane resin, a polyether-based urethane resin, or a polyester-based urethane resin), and the like are mainly used as a coating agent depending on the purposes (such as texture, waterproofness, air permeability, and moisture permeability). In the water repellent fiber product, it can be said that it is desirable not to lower the adhesion to such a coating agent (see, for example, Japanese Patent Laid-open Publication No. 2018-119250).

### EMBODIMENTS OF THE INVENTION

### 1. Water Repellent Composition

A water repellent composition of the present invention is a water repellent composition containing at least a reaction product (AB) of a polyol compound (A) and a polyisocyanate compound (B), and a water repellency-imparting compound (C). The polyol compound (A) is at least one of a polyol compound (A1) having one or more of at least one functional group selected from the group consisting of an ether group, a carbonate group, and an ester group and a polyol compound (A2) having none of the functional groups. The reaction product (AB) has an isocyanate group. When the polyol compound (A) includes only the polyol compound (A2) in the reaction product (AB), a molar ratio (B/A2) of an isocyanate group in the polyisocyanate compound (B) to a hydroxyl group in the polyol compound (A2) is 2.1 or more. The water repellency-imparting compound (C) has no perfluoroalkyl group having 7 or more carbon atoms. A mass ratio (AB/C) of the reaction product (AB) to the water repellency-imparting compound (C) is 0.05 or more. By the water repellent composition of the present invention including these configurations, excellent chalk mark resistance is exhibited. Hereinafter, the water repellent composition of the present invention will be specifically described.

In the following description, a one-agent type water repellent composition containing a reaction product (AB) of a polyol compound (A) and a polyisocyanate compound (B), and a water repellency-imparting compound (C) will be mainly described, but as described below, in the present invention, a two-agent type kit can also be configured. An assumed kit is shown below.

### (Kit)

A two-agent type kit for preparing a water repellent composition by mixing a first agent and a second agent at the time of use, the kit including the first agent containing at least a reaction product (AB) of a polyol compound (A) and a polyisocyanate compound (B), and the second agent containing at least a water repellency-imparting compound (C), in which the polyol compound (A) is at least one of a polyol compound (A1) having one or more of at least one functional group selected from the group consisting of an ether group, a carbonate group, and an ester group and a polyol compound (A2) having none of the functional groups, the reaction product (AB) has an isocyanate group (as described below, the isocyanate group may not be blocked or may be blocked (that is, may be a blocked isocyanate group)), when the polyol compound (A) includes only the polyol compound (A2) in the reaction product (AB), a molar ratio (B/A2) of an isocyanate group in the polyisocyanate compound (B) to a hydroxyl group in the polyol compound (A2) is 2.1 or more, the water repellency-imparting compound (C) has no perfluoroalkyl group having 7 or more carbon atoms, and a mass ratio (AB/C) of the reaction product (AB) to the water repellency-imparting compound (C) is 0.05 or more.

The kit of the present invention can be suitably used for preparing the water repellent composition of the present invention. As described below, the water repellent composition of the present invention can be an aqueous dispersion in which each component is dispersed in water, and also when these kits are used, the first agent and the second agent are dispersed in water at the time of use, and the water repellent composition of the present invention can also be prepared as an aqueous dispersion. Each of the first agent and the second agent constituting the kit can be an aqueous dispersion of each component.

### [Reaction Product (AB)]

The reaction product (AB) contained in the water repellent composition of the present invention is a reaction product of the polyol compound (A) and the polyisocyanate compound (B). The polyol compound (A) forming the reaction product (AB) is at least one of a polyol compound (A1) having one or more of at least one functional group selected from the group consisting of an ether group, a carbonate group, and an ester group and a polyol compound (A2) having none of the functional groups. The reaction product (AB) has an isocyanate group. That is, the reaction product (AB) has a urethane bond formed by reaction between the hydroxyl group in the polyol compound (A) and the isocyanate group in the polyisocyanate compound (B).

The lower limit of a molar ratio (B/A1) of the isocyanate group in the polyisocyanate compound (B) to a hydroxyl group in the polyol compound (A1) is preferably 1 or more, and is, for example, more than 1, 1.005 or more, or 1.007 or more. The molar ratio (B/A1) is preferably about 1 to 25, more preferably about 1.1 to 20, further preferably about 1.2 to 15, further preferably about 1.3 to 10, and further preferably about 1.4 to 5. A mass ratio (described as a mass ratio (component (B)/component (A1)) or a mass ratio (B/A1)) of the polyol compound (A1) and the polyisocyanate compound (B) in forming of the reaction product (AB) is preferably 0.1 to 150, more preferably 0.2 to 110, further preferably 0.4 to 80, further preferably 0.6 to 55, and further preferably 0.8 to 30.

When the polyol compound (A) includes only the polyol compound (A2) in the reaction product (AB), a molar ratio (B/A2) of the isocyanate group in the polyisocyanate compound (B) to the hydroxyl group in the polyol compound (A2) is 2.1 or more, and the molar ratio (B/A2) is preferably 2.4 or more, more preferably 2.6 or more, further preferably 2.8 or more, and further preferably 3.0 or more. The upper limit of the molar ratio (B/A2) is not particularly limited, but is preferably 25 or less, more preferably 20 or less, further preferably 15 or less, further preferably 10 or less, and further preferably 5 or less. A mass ratio (described as a mass ratio (component (B)/component (A2)) or a mass ratio (B/A2)) of the polyol compound (A2) and the polyisocyanate compound (B) in forming of the reaction product (AB) is preferably 0.1 to 150, more preferably 0.2 to 110, further preferably 0.4 to 80, particularly preferably 0.6 to 55, and most preferably 0.8 to 30.

When the polyol compound (A1) and the polyol compound (A2) are used in combination in the reaction product (AB), the lower limit of a ratio (molar ratio B/(A1 + A2)) of the number of moles of the isocyanate group in the polyisocyanate compound (B) to the total number of moles of the hydroxyl groups in the polyol compound (A1) and the polyol compound (A2) is preferably 1 or more, and is, for example, more than 1, 1.005 or more, or 1.007 or more. The molar ratio B/(A1 + A2) is preferably about 1 to 25, more preferably about 1.1 to 20, further preferably about 1.2 to 15, further preferably about 1.3 to 10, and further preferably about 1.4 to 5. When the polyol compound (A1) and the polyol compound (A2) are used in combination in forming of the reaction product (AB), a ratio (described as a mass ratio (component (B)/components (A1 + A2)) or a mass ratio B/(A1 + A2)) of the mass of the polyisocyanate compound (B) to the total mass of the polyol compound (A1) and the polyol compound (A2) is preferably 0.1 to 150, more preferably 0.2 to 110, further preferably 0.4 to 80, further preferably 0.6 to 55, and further preferably 0.8 to 30.

As described above, the reaction product (AB) may have a hydroxyl group in the structure thereof in addition to the isocyanate group and the urethane bond. That is, the reaction product (AB) may be a compound having a hydroxyl group, an isocyanate group, and a urethane bond. When the reaction product (AB) has a hydroxyl group, the isocyanate group is usually a blocked isocyanate group described below. When the polyol compound (A1) is used for formation of the reaction product (AB), one or more of at least one functional group selected from the group consisting of an ether group, a carbonate group, and an ester group may be further included in the reaction product (AB).

From the viewpoint of product stability and processing stability, the isocyanate group in the structure of the reaction product (AB) may be a blocked isocyanate group in which an isocyanate group is protected with a blocking agent. That is, in the present invention, the concept of the isocyanate group in the reaction product (AB) includes an unblocked isocyanate group and a blocked isocyanate group in which an isocyanate group is protected with a blocking agent. The isocyanate group in the reaction product (AB) may be partially or completely blocked (protected) with a blocking agent, and for example, it is preferable that preferably 50 mol% or more, more preferably 60 mol% or more, further preferably 70 mol% or more, particularly preferably 80 mol% or more, and most preferably 90 mol% or more of the isocyanate group is blocked with a blocking agent.

As the blocking agent to be introduced into the isocyanate group, a known blocking agent can be used, the blocking agent is a compound having one or more active hydrogens in the molecule, and one kind thereof can be used alone or two or more kinds thereof can be used in appropriate combination. Examples of the blocking agent include alcohol-based compounds, alkylphenol-based compounds, phenol-based compounds, active methylene-based compounds, mercaptan-based compounds, acid amide-based compounds, acid imide-based compounds, imidazole-based compounds, imidazoline-based compounds, pyrimidine-based compounds, guanidine-based compounds, triazole-based compounds, carbamic acid-based compounds, urea-based compounds, oxime-based compounds, amine-based compounds, imide-based compounds, imine-based compounds, pyrazole-based compounds, and bisulfite. Among these, acid amide-based compounds, active methylene-based compounds, oxime-based compounds, pyrazole-based compounds, and amine-based compounds are preferable, and ε-caprolactam, acetylacetone, diethyl malonate, methyl ethyl ketone oxime, cyclohexanone oxime, 3-methylpyrazole, 3,5-dimethylpyrazole, dipropylamine, dibutylamine, propylbenzylamine, butylbenzylamine, and diethanolamine can be preferably used.

As described above, when the isocyanate group of the reaction product (AB) is an isocyanate group protected with a blocking agent, the reaction product (AB) may be a compound in which a hydroxyl group derived from the polyol compound (A) remains in the structure. Such a reaction product (AB) can be obtained, for example, by blocking a part of the reactive functional groups (isocyanate groups) of the polyisocyanate compound (B) with a blocking agent, and then reacting the polyol compound (A) so that the hydroxyl groups are excessive with respect to the remaining isocyanate groups. At this time, the polyol compound (A) and the polyisocyanate (B) are at least partially reacted, and the molar ratio of the reactive functional groups and the mass ratio of the two components may be in the above ranges. When there is a sufficient difference in reaction rate between the blocking agent and the polyol compound (A) with respect to the isocyanate group, it is also possible to adopt a method in which the polyol compound (A), the polyisocyanate compound (B), and the blocking agent are all mixed and reacted.

From the viewpoint of product stability and processing stability, the reaction product (AB) preferably has self-emulsifiability (dispersibility), and for example, a method of introducing a nonionic hydrophilic group, a cationic hydrophilic group, or an anionic hydrophilic group into a part of the isocyanate group in the reaction product (AB), and a nonionic hydrophilic group is particularly preferable. Known hydrophilic compounds can be used as a hydrophilic compound to be reacted for imparting self-emulsifiability, examples thereof include polyoxyalkylene monoalkyl ethers such as polyethylene glycol monomethyl ether, polyethylene glycol monoethyl ether, polyethylene glycol polypropylene glycol monomethyl ether, and polypropylene glycol polyethylene glycol monobutyl ether; (poly)ethylene glycols such as ethylene glycol or diethylene glycol, triethylene glycol, and triethylene glycol; block copolymers or random copolymers of polyethylene glycol, polypropylene glycol, and polytetramethylene glycol, and random copolymers or block copolymers of ethylene oxide and propylene oxide and ethylene oxide and butylene oxide; polyoxyalkylene monoamines, and polyoxyalkylene diamines, and polyethylene glycol monomethyl ether, and polyethylene glycol monoethyl ether are preferably used. The nonionic hydrophilic compounds may be used singly or in combination of two or more kinds thereof. By introducing these compounds in a predetermined amount with respect to the isocyanate group in the reaction product (AB), self-emulsifiability (dispersibility) can be imparted. The introduction amount of these compounds is preferably about 0.5 to 50 mol%, more preferably about 0.6 to 40 mol%, further preferably about 0.7 to 30 mol%, particularly preferably 0.8 to 20 mol%, and most preferably 1 to 10 mol%, with respect to the isocyanate group in the reaction product (AB).

The reaction product (AB) may be a compound in which a urea group is partially introduced (excluding a compound derived from a blocking agent), and can be introduced by partially reacting with water, an aliphatic polyamine such as ethylenediamine, trimethylenediamine, hexamethylenediamine, or diethylenetriamine, or an alicyclic polyamine such as isophoronediamine in a production step.

Hereinafter, the polyol compound (A) and the polyisocyanate compound (B) that form the reaction product (AB) will be specifically described.

### (Polyol Compound (A))

The polyol compound (A) (hereinafter, described as the component (A) in some cases) is a compound having a plurality of hydroxyl groups (reactive functional groups). Among the polyol compound (A1) and the polyol compound (A2) described above, the polyol compound (A) is preferably the polyol compound (A1) (hereinafter, described as the component (A1) in some cases) having one or more of at least one group selected from the group consisting of at least an ether group, a carbonate group, and an ester group in the structure. The polyol compound (A) may be a monomer or may be a compound obtained by reacting a monomer with a dimer or more (for example, a polymer polyol compound that is a polymer). When the monomer is reacted with a dimer or more, the number of monomers that form the polyol compound (A1) may be one or two or more kinds.

When the polyol compound (A1) is a polymer polyol compound, the number average molecular weight thereof is, for example, 80 to 5000 g/mol, preferably 120 to 4000 g/mol, further preferably 160 to 3000 g/mol, and particularly preferably 200 to 2000 g/mol. When the polyol compound (A1) is a polymer polyol compound, examples of the linking group of the main chain thereof include a polymer polyol compound including at least one of a carbonate group, an ester group, and an ether group as a constituent unit. Among these, a polymer polyol compound having a carbonate group as a linking group of a main chain, a polymer polyol compound having a carbonate group and an ester group as a linking group of a main chain, a polymer polyol compound having an ester group as a linking group of a main chain, and a polymer polyol compound having an ether group as a linking group of a main chain are preferable.

As the polyol compound (A1), a known polyol for synthesizing polyurethane (urea) can be used, and examples thereof include polycarbonate polyol, polyester polyol, and polyether polyol.

As the polycarbonate polyol, a known polycarbonate polyol can be used, and for example, the polycarbonate polyol can be obtained by a method of reacting a polyol monomer with phosgene, a method of reacting a polyol monomer with a carbonate ester (such as dimethyl carbonate, diethyl carbonate, or diphenyl carbonate).

The polyol monomer is not particularly limited, and examples thereof include an aliphatic polyol monomer, a polyol monomer having an alicyclic structure, an aromatic polyol monomer, a polyester polyol monomer, and a polyether polyol monomer.

The aliphatic polyol monomer is not particularly limited, and examples thereof include linear aliphatic diols such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol; branched chain aliphatic diols such as 1,2-propanediol, 1,3-butanediol, 2-methyl-1,3-propanediol, 1,4-pentanediol, 2-methyl-1,4-butanediol, neopentyl glycol, 1,5-hexanediol, 2-methyl-1,5-pentanediol, 3-methyl-1,5-pentanediol, 2-methyl-1,8-octanediol, 2-methyl-1,9-nonanediol, and 2-methyl-1,3-propanediol; and polyhydric alcohols having three or more hydroxyl groups such as trimethylolpropane and pentaerythritol.

The polyol monomer having an alicyclic structure is not particularly limited, and examples thereof include 1,3-cyclopentanediol, 1,3-cyclohexanediol, 1,4-cyclohexanediol, 1,3-cyclohexanedimethanol, 1,4-cyclohexanedimethanol, 1,4-cycloheptanediol, 2,7-norbornanediol, 1,4-bis(hydroxyethoxy)cyclohexane, isosorbide, and dimer diol.

The aromatic polyol monomer is not particularly limited, and examples thereof include catechol, hydroquinone, resorcinol, 1,3-benzenedimethanol, 1,4-benzenedimethanol, and bisphenol A.

The polyester polyol monomer is not particularly limited, and examples thereof include polyester polyols of hydroxycarboxylic acid and a diol such as 6-hydroxycaproic acid and hexanediol, and polyester polyols of dicarboxylic acid and a diol such as a polyester polyol of adipic acid and hexanediol.

The polyether polyol monomer is not particularly limited, and examples thereof include polyalkylene glycols such as polyethylene glycol, polypropylene glycol, and polytetramethylene glycol.

The polycarbonate polyol may be obtained from these polyol monomers alone or in combination of two or more kinds thereof. Such polycarbonate polyols are available as commercial products.

As the polyester polyol, a known polyester polyol can be used, and for example, a polyester polyol can be obtained by reacting a polyol monomer with a polybasic acid. The polybasic acid may be a carboxylic acid anhydride, a carboxylic acid halide, or a carboxylic acid ester (such as carboxylic acid methyl ester or carboxylic acid ethyl ester) derived from a carboxylic acid.

The polyester polyol is not particularly limited, and examples thereof include polyester diols such as polyethylene adipate diol, polybutylene adipate diol, polyethylene butylene adipate diol, polyhexamethylene isophthalate adipate diol, polyethylene succinate diol, polybutylene succinate diol, polyethylene sebacate diol, polybutylene sebacate diol, poly-ε-caprolactone diol, poly(3-methyl-1,5-pentylene adipate) diol, poly(3-methyl-1,5-pentylene isophthalate adipate) diol, and a polycondensate of 1,6-hexanediol and dimer acid. Such polyester polyols are available as commercial products.

As the polyether polyol, a known polyether polyol can be used, and examples thereof include polytrimethylene glycol and polytetramethylene glycol. A compound obtained by adding an alkylene oxide to a compound containing 2 to 8 active hydrogen atoms in one molecule as described in [0010] to [0013] of Japanese Patent Laid-open Publication No. 2020-2197 can be used.

As the alkylene oxide, ethylene oxide (EO), propylene oxide (PO), butylene oxide (BO), or styrene oxide can be used, and these may be used alone or in combination of two or more kinds thereof. The addition mode in the case of using two or more kinds in combination may be block addition or random addition.

As the active hydrogen atom-containing compound, water, an alcohol, and an amino group-containing compound can be preferably used. Examples of the compound obtained from water or a dihydric alcohol (for example, ethylene glycol, propylene glycol, 1,3-butylene glycol, 1,4-butanediol, 1,6-hexanediol, 3-methylpentanediol, diethylene glycol, neopentyl glycol, 1,4-bis(hydroxymethyl)cyclohexane, 1,4-bis(hydroxyethyl)benzene, or 2,2-bis(4,4'-hydroxycyclohexyl)propane) include a polyalkylene glycol (for example, polyethylene glycol, polypropylene glycol, polybutylene glycol, or a random copolymer or block copolymer of EO·PO, EO·BO, PO·BO, or EO·PO·BO), and an alkylene oxide adduct.

It is also possible to preferably use alkylene oxide adducts of trihydric or higher alcohols (for example, trihydric alcohols such as glycerin and trimethylolpropane; and tetrahydric to octahydric alcohols such as pentaerythritol, diglycerin, α-methylglucoside, sorbitol, xylite, mannitol, dipentaerythritol, glucose, fructose, and sucrose), and alkylene oxide adducts of amino group-containing compounds (for example, ammonia; alkylamine having 1 to 20 carbon atoms; aliphatic polyamines such as ethylenediamine, trimethylenediamine, hexamethylenediamine, and diethylenetriamine; and alkanolamines such as monoethanolamine, diethanolamine, triethanolamine, and triisopropanolamine).

The polyol compound (A) may be a polyol compound (A2) (hereinafter, described as the component (A2) in some cases) having none of an ether group, a carbonate group, and an ester group in the structure, and as the polyol compound (A2), for example, the above-described polyol monomer, or the above-described active hydrogen atom-containing compound (a compound having two or more hydroxyl groups) can be used.

The number of hydroxyl groups in one molecule of the polyol compound (A) may be two or more, and for example, from the viewpoint of improving washing durability, the number of hydroxyl groups is preferably large. However, since the possibility of gelation during the reaction with the polyisocyanate compound (B) increases, the number of hydroxyl groups in one molecule of the polyol compound (A) is preferably 2 to 5, more preferably 2 to 4, and further preferably 2 to 3.

### (Polyisocyanate Compound (B))

As the polyisocyanate compound (B) (hereinafter, described as component (B) in some cases), a known isocyanate compound having two or more isocyanate groups (reactive functional groups) in one molecule can be used singly or in an appropriate combination of two or more kinds thereof. In the present invention, the isocyanate group in the isocyanate compound may be a blocked isocyanate group in which an isocyanate group is protected with a blocking agent. That is, in the present invention, the isocyanate group in the polyisocyanate compound (B) includes an unblocked isocyanate group and a blocked isocyanate group in which an isocyanate group is protected with a blocking agent.

Examples of the polyisocyanate compound include aliphatic polyisocyanates, alicyclic polyisocyanates, aromatic polyisocyanates, and araliphatic polyisocyanates. Examples of the aliphatic polyisocyanates include 1,4-tetramethylene diisocyanate, 1,5-pentamethylene diisocyanate, 1,6-hexamethylene diisocyanate, 2,2,4-trimethylhexamethylene diisocyanate, 2,4,4-trimethylhexamethylene diisocyanate, lysine diisocyanate, and dimer acid diisocyanate, examples of the alicyclic polyisocyanates include 1,3-bis(isocyanatomethyl)cyclohexane, 1,4-bis(isocyanatomethyl)cyclohexane, 3-isocyanatomethyl-3,3,5-trimethylcyclohexane (isophorone diisocyanate), bis-(4-isocyanatocyclohexyl)methane (hydrogenated MDI), and norbornane diisocyanate, examples of the aromatic polyisocyanates include 2,4'-diphenylmethane diisocyanate, 4,4'-diphenylmethane diisocyanate, crude MDI, 1,4-phenylene diisocyanate, 2,4-tolylene diisocyanate, 2,6-tolylene diisocyanate, 3,3'-dimethyl-4,4'-diisocyanatobiphenyl, 3,3'-dimethyl-4,4'-diisocyanatodiphenylmethane, and 1,5-naphthylene diisocyanate, and examples of the araliphatic polyisocyanates include 1,3-xylylene diisocyanate, 1,4-xylylene diisocyanate, and α,α,α',α'-tetramethylxylylene diisocyanate. It is also preferable to use a reaction product of these compounds, for example, an adduct type polyisocyanate, an isocyanate-modified product obtained by a uretdionization reaction, an isocyanuration reaction, a carbodiimidization reaction, or a uretonimination reaction, a biuretization reaction, or a mixture thereof.

In the case of the isocyanate-modified product, the reactive functional group refers to an isocyanate group remaining in the structure, and for example, when 1,6-hexamethylene diisocyanate is trimerized by an isocyanuration reaction, the number of reactive functional groups (isocyanate groups) is 3.

In the case of the adduct type polyisocyanate, as in the case of the isocyanate-modified product, the reactive functional group refers to an isocyanate group remaining in the structure, but in the case of an adduct derived from the polyol compound (A), the reactive functional group is separated into the polyol compound (A) and the polyisocyanate compound (B) as precursors. For example, in the case of an adduct obtained from one molecule of trimethylolpropane and three molecules of 2,4-tolylene diisocyanate, the number of reactive functional groups is 3 for the hydroxyl group and 6 for the isocyanate group.

In order to obtain a more excellent effect in the present invention, aliphatic polyisocyanates, alicyclic polyisocyanates, aromatic polyisocyanates, and araliphatic polyisocyanates can be preferably used, aliphatic polyisocyanates, alicyclic polyisocyanates, and araliphatic polyisocyanates are more preferably used, and aliphatic polyisocyanates and alicyclic polyisocyanates are further preferably used.

### (Water Repellency-Imparting Compound (C))

The water repellency-imparting compound (C) (hereinafter, described as component (C) in some cases) can be variously selected from those used as known water repellents excluding a perfluoroalkyl group-containing compound having 7 or more carbon atoms according to the intended performance (for example, water repellency). As the water repellency-imparting compound (C), for example, a fluorine compound having a perfluoroalkyl group having 1 to 6 carbon atoms (for example, a fluorine-containing polymer having a structure derived from a polymerizable compound (monomer; fluorine-containing polymer) having a perfluoroalkyl group having 1 to 6 carbon atoms and a carbon-carbon double bond), and a non-fluorine compound having a hydrocarbon group having 7 to 40 carbon atoms (for example, a fluorine-free polymer having a structure derived from a polymerizable compound (monomer; non-fluorine monomer) having a hydrocarbon group having 7 to 40 carbon atoms and a carbon-carbon double bond) can be used. These fluorine compound and non-fluorine compound may be used in combination.

The fluorine compound having a perfluoroalkyl group having 1 to 6 carbon atoms is preferably a polymer containing a monomer represented by General Formula (1) below in at least a constituent unit thereof.

CH₂ = C(-X) - C(= O) - Y - Z - Rf ··· (1)

[wherein X is a hydrogen atom, a monovalent organic group (such as a methyl group or an ethyl group), a halogen atom, or a group -CH₂-C(=O)-Y-Z-Rf, Y is -O- or -NH-, Z is a direct bond or a divalent organic group, and Rf is a perfluoroalkyl group having 1 to 6 carbon atoms. When a plurality of Y, Z, and Rf are present in the molecule, they may be the same as or different from each other. However, the monovalent organic group does not include the group -CH₂-C(=O)-Y-Z-Rf.]

The polymerizable compound (monomer, referred to as C1a in some cases) having a perfluoroalkyl group having 1 to 6 carbon atoms and a carbon-carbon double bond as represented by General Formula (1) above may be any polymerizable compound having a perfluoroalkyl group having 1 to 6 carbon atoms, and may have a perfluoroalkyl group having preferably 2 to 6 carbon atoms, more preferably 4 to 6 carbon atoms, and particularly preferably 6 carbon atoms. Specifically, among the fluorine-containing monomers described in paragraphs [0027] to [0037] of Japanese Patent Laid-open Publication No. 2019-196463, a monomer having a perfluoroalkyl group having 1 to 6 carbon atoms can be used. From the viewpoint of water repellency and versatility, 3,3,4,4,5,5,6,6,6-nonafluorohexyl (meth)acrylate, 3,3,4,4,5,5,6,6,7,7,8,8,8-tridecafluorooctyl (meth)acrylate, and 3,3,4,4,5,5,6,6,7,7,8,8,8-tridecafluorooctyl α-chloroacrylate can be preferably used.

The non-fluorine compound having a hydrocarbon group having 7 to 40 carbon atoms is preferably a polymer containing a monomer represented by General Formula (2) below in at least a constituent unit thereof.

CH₂ = C(-X) - C( =O) - Y-R ··· (2)

[wherein X is a hydrogen atom, a monovalent organic group (such as a methyl group or an ethyl group), a halogen atom (excluding a fluorine atom), or a group -CH₂-C(=O)-Y-R, Y is divalent to tetravalent linking group having at least one group selected from -O- and -NH-, or -NR-, and R is a hydrocarbon group having 7 to 40 carbon atoms. When a plurality of Y and R are present in the molecule, they may be the same as or different from each other. However, the monovalent organic group does not include the group - CH₂-C(=O)-Y-Z-Rf.]

In General Formula (2) above, preferably, Y is -Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-, Y' is a direct bond, -O-, or -NH-, and R' is -(CH₂)m- (m is an integer of 1 to 5) or -C₆H₆- (phenylene group).

The polymerizable compound (monomer, referred to as C1b in some cases) having a hydrocarbon group having 7 to 40 carbon atoms and a carbon-carbon double bond as represented by General Formula (2) above may be a polymerizable compound having a hydrocarbon group having 7 to 40 carbon atoms, and is preferably a linear or branched hydrocarbon group having 7 to 40 carbon atoms and more preferably a linear hydrocarbon group. The hydrocarbon group is preferably an aliphatic hydrocarbon group, more preferably a saturated aliphatic hydrocarbon group, and particularly preferably an alkyl group. The number of carbon atoms in the hydrocarbon group is preferably 10 to 30, more preferably 12 to 26, particularly preferably 16 to 24, and most preferably 18 to 22. From the viewpoint of water repellency and versatility, lauryl (meth)acrylate, stearyl (meth)acrylate, icosyl (meth)acrylate, and behenyl (meth)acrylate can be preferably used.

Non-fluorine monomers (α-substituted acrylates) as described in paragraphs [0014] to [0016] of Japanese Patent Laid-open Publication No. 2017-66325 can be used, and for example, lauryl α-chloroacrylate, stearyl α-chloroacrylate, icosyl α-chloroacrylate, and behenyl α-chloroacrylate can be preferably used.

Among non-fluorine monomers (amide group-containing monomers) as described in paragraphs [0015] to [0020] WO 2019/026593 A and paragraphs [0016] to [0020] of Japanese Patent Laid-open Publication No. 2019-26747, acrylic monomers can be used. For example, amidoethyl laurate (meth)acrylate, amidoethyl myristate (meth)acrylate, amidoethyl palmitate (meth)acrylate, amidoethyl stearate (meth)acrylate, amidoethyl behenate (meth)acrylate, lauryl (meth)acrylamide, cetyl (meth)acrylamide, stearyl (meth)acrylamide, and behenyl (meth)acrylamide can be preferably used.

Non-fluorine monomers (urethane group or urea group-containing monomers) as described in paragraphs [0016] to [0023] of Japanese Patent Laid-open Publication No. 2019-26746 can be used. For example, a compound obtained by reacting hydroxyalkyl (meth)acrylate or hydroxyalkyl (meth)acrylamide with long-chain alkyl isocyanate (such as lauryl isocyanate, myristyl isocyanate, cetyl isocyanate, stearyl isocyanate, or behenyl isocyanate), or a compound obtained by reacting (meth)acrylate having an isocyanate group in a side chain (such as 2-methacryloyloxyethyl methacrylate) with long-chain alkylamine (such as laurylamine, myristyl amine, cetyl amine, stearyl amine, or behenyl amine) or long-chain alkyl alcohol (such as lauryl alcohol, myristyl alcohol, cetyl alcohol, stearyl alcohol, or behenyl alcohol) can be preferably used.

As the polymerizable compound (monomer) having a hydrocarbon group having 7 to 40 carbon atoms and a carbon-carbon double bond other than General Formula (2) above, non-fluorine monomers as described in paragraphs [0016] to [0034] of JP 2017-538793 A can be used, and for example, sorbitan tristearate methacrylate (described in paragraph [0077]), sorbitan tristearate urethane methacrylate (described in paragraph [0078]), a sorbitan tristearate urethane styrene monomer (described in paragraph [0079]), and sorbitan trioleate methacrylate (described in paragraph [0080]) can be preferably used.

As the monomers represented by General Formulae (1) and (2), among the fluorine-containing monomers described in paragraphs [0023] and [0026] to [0029] of WO 2016/178429 A, a monomer having a perfluoroalkyl group having 1 to 6 carbon atoms can be used, and for example, itaconic acid diester having a perfluoroalkyl group having 1 to 6 carbon atoms (particularly, the monomer described in paragraph [0103]) can be preferably used. Among the non-fluorine monomers described in paragraphs [0025] and [0034] to [0036], a monomer having a hydrocarbon group having 6 to 40 carbon atoms can be used, and for example, distearyl itaconate can be preferably used.

As the component constituting the fluorine-containing polymer or the fluorine-free polymer, the monomers can be used singly or in combination of two or more kinds thereof, and the content thereof is not particularly limited as long as the intended performance (particularly, water repellency) can be achieved. The content of the monomer when high water repellency is required may be 20 mass% or more, and is preferably 30 mass% or more, more preferably 40 mass% or more, further preferably 50 mass% or more, particularly preferably 60 mass% or more, and especially preferably 70 mass% or more.

Other polymerizable compounds (monomers) having a carbon-carbon double bond can be copolymerized according to other required performance (for example, washing durability of water repellency), and examples of the mode thereof include known random copolymerization, alternating copolymerization, block copolymerization, and graft copolymerization.

As the other monomers, one or two or more kinds of known monomers as described below can be copolymerized, and the content thereof is not particularly limited, but may be, for example, 80 mass% or less, and is preferably 70 mass% or less, more preferably 60 mass% or less, further preferably 50 mass% or less, particularly preferably 40 mass% or less, and especially preferably 30 mass% or less.

The other monomers are not particularly limited, but for example, an alkyl (meth)acrylate having 1 to 6 carbon atoms can be used, and examples thereof include methyl (meth)acrylate, ethyl (meth)acrylate, butyl (meth)acrylate, and hexyl (meth)acrylate.

(Meth)acrylates having a cyclic hydrocarbon group described in paragraphs [0027] to [0030] of Japanese Patent Laid-open Publication No. 2019-26746 can be used, and examples thereof include cyclohexyl (meth)acrylate, t-butylcyclohexylcyclohexyl (meth)acrylate, benzyl (meth)acrylate, and isoboronyl (meth)acrylate.

Halogenated olefins described in paragraph [0035] of Japanese Patent Laid-open Publication No. 2019-26746 can be used, and examples thereof include vinyl chloride and vinylidene chloride.

A silicone compound (referred to as C1c in some cases) having a polymerizable group can be used, as the polymerizable group, one introduced into a silicone side chain and/or a terminal can be used, it is preferable that a polymerizable group is introduced into one terminal or both terminals, and it is particularly preferable that a polymerizable group is introduced into one terminal. For example, although not particularly limited, a silicone compound having a carbon-carbon double bond or a silicone compound having a mercapto group can be used, and specific examples thereof include silicone macromers having a polymerizable group described in paragraphs [0036] to [0045] of Japanese Patent Laid-open Publication No. 2019-26746. The silicone compounds can be are available as commercial products, and examples thereof include (meth)acrylic-modified silicone; mercapto-modified silicone such as X-22-174ASX, X-22-174BX, KF-2012, X-22-2404, X-22-2426, X-22-2445, X-22-164, X-22-164AS, X-22-164A, X-22-164B, X-22-164C, and X-22-164E manufactured by Shin-Etsu Chemical Co., Ltd., and Silaplane FM-0711, FM-0721, FM-0725, FM-7711, FM-7721, and FM-7725 manufactured by JNC CORPORATION; and KF-2001, KF-2004, X-22-167B, and X-22-167C manufactured by Shin-Etsu Chemical Co., Ltd.

Ethylene, vinyl acetate, acrylonitrile, and styrene which are generally used can be used.

A crosslinkable monomer as described in paragraph [0031] of Japanese Patent Laid-open Publication No. 2019-26746 can be used, and although not particularly limited, for example, a monomer having a hydroxyl group, an epoxy group, a chloromethyl group, a bromomethyl group, a blocked isocyanate group, an amino group, or a carboxyl group, or a monomer having two or more polymerizable functional groups in one molecule can be used. Examples thereof include hydroxyalkyl (meth)acrylate such as 2-hydroxyethyl (meth)acrylate, 2,3-dihydroxypropyl (meth)acrylate, 3-chloro-2-hydroxypropyl (meth)acrylate, glycidyl (meth)acrylate, vinyl monochloroacetate, 2-[(3,5-dimethylpyrazolyl)carbonylamino]ethyl (meth)acrylate, N,N-dialkylaminoalkyl (meth)acrylate such as N,N-dimethylaminoethyl (meth)acrylate, N-methylol (meth)acrylamide, (meth)acrylic acid, itaconic acid, and 1,4-butanediol di(meth)acrylate.

Reactive emulsifiers as described in paragraphs [0074] to [0094] of Japanese Patent Laid-open Publication No. 2017-155095 can also be copolymerized.

As the water repellency-imparting compound (C), an isocyanate-reactive compound having at least one or more hydrocarbon groups having 7 to 40 carbon atoms and at least one or more functional groups capable of reacting with an isocyanate group in one molecule can be used. Examples of the isocyanate-reactive compound include a compound represented by General Formula (3) below.

W[-A-R]a[-B]b (3)

In General Formula (3), W is an (a + b)-valent organic group. A is bonded to W and is -X-Y- or -Y-. B is bonded to W and is -X-Z or -Z. a is an integer of 1 or more. b is an integer of 1 or more. (a + b) is 3 to 42. X is a divalent polyalkylene ether group. Y is a divalent group, and is an ether group, an ester group, an amide group, a urethane group, a urea group, or a thiourethane group. R is a monovalent hydrocarbon group having 7 to 40 carbon atoms. Z is a hydroxy group, an amino group, a carboxy group, or a thiol group. However, when B is -X-Z, Z is a hydroxy group.

In the isocyanate-reactive compound represented by General Formula (3), the hydroxy group, amino group, carboxy group, or thiol group of the group Z is a functional group capable of reacting with an isocyanate group. The isocyanate-reactive compound is a compound having a monovalent hydrocarbon group having 7 to 40 carbon atoms derived from the group R.

In the isocyanate-reactive compound of General Formula (3), the group W is preferably an (a + b)-valent organic group and a residue of a polyfunctional compound. A group A and a group B are bonded to the group W. a is an integer of 1 or more, b is an integer of 1 or more, and (a + b) is 3 to 42. That is, the valence of the group W is 3 to 42. Preferable examples of the polyfunctional compound include a polyhydric alcohol compound, a polyvalent amine compound, a polyvalent carboxylic acid compound, and a polyvalent thiol compound.

The polyhydric alcohol compound is not particularly limited, and examples thereof include trimethylolethane, trimethylolpropane, ditrimethylolpropane, 1,2,4-butanetriol, dipentaerythritol, sugar, sugar alcohol, sugar acid, and amino sugar.

Examples of the sugar include glucose, erythrose, arabinose, ribose, allose, altrose, mannose, xylose, lyxose, gulose, galactose, talose, threose, glucopyranose, mannopyranose, talopyranose, allopyranose, altropyranose, idopyranose, gulopyranose, fructose, ribulose, mannoheptulose, and sedoheptulose.

The sugar alcohol is a compound produced by reduction of a carbonyl group of the sugar (aldose or ketose). Examples of the sugar alcohol include glycerin, erythritol, threitol, mannitol, sorbitol, arabitol, xylitol, ribitol, galactitol, fucitol, iditol, inositol, pentaerythritol, and volemitol.

The sugar acid is a compound in which a monosaccharide is oxidized and a carboxy group is introduced. Examples of the sugar acid include gluconic acid, glyceric acid, xylonic acid, galacturic acid, ascorbic acid, lactone gluconate, and lactone xylonate.

The amino sugar is a compound in which a part of the hydroxy group of the monosaccharide is substituted with an amino group. Examples of the amino sugar include glucosamine and galactosamine.

The amino sugar may be a compound derived from these compounds by a dehydration reaction. Examples thereof include sorbitan (derived from sorbitol) and polyglycerin (derived from glycerin).

The polyvalent amine compound is not limited, and examples thereof include diethylenetriamine, triethylenetetramine, aminoethylethanolamine, diethanolamine, and triethanolamine.

The polyvalent carboxylic acid compound is not limited, and examples thereof include malic acid and citric acid.

The polyvalent thiol compound is not limited, and examples thereof include trimethylolpropane tris(3-mercaptopropionate), tris-[(3-mercaptopropionyloxy)-ethyl]-isocyanurate, pentaerythritol tetrakis(3-mercaptopropionate), and dipentaerythritol hexakis(3-mercaptopropionate).

In A and B of General Formula (3), the group X is a divalent polyalkylene ether group (that is, a polyoxyalkylene group). Specific examples of the group X include homopolymers such as ethylene oxide, propylene oxide, and butylene oxide, and block copolymers or random copolymers obtained by combining two or more kinds thereof.

The group Y is, as described above, a divalent group, and is an ether group, an ester group, an amide group, a urethane group, a urea group, or a thiourethane group.

The group R is bonded to the group Y and is a monovalent hydrocarbon group having 7 to 40 carbon atoms, preferably a linear or branched hydrocarbon group having 7 to 40 carbon atoms, and more preferably a linear hydrocarbon group. The hydrocarbon group is preferably an aliphatic hydrocarbon group, more preferably a saturated or unsaturated aliphatic hydrocarbon group, and particularly preferably an alkyl group. The number of carbon atoms in the hydrocarbon group is preferably 10 to 30, more preferably 12 to 26, particularly preferably 16 to 24, and most preferably 18 to 22. Specific examples of the hydrocarbon group include a decyl group, an undecyl group, a dodecyl group (lauryl group), a myristyl group, a pentadecyl group, a cetyl group, a heptadecyl group, a stearyl group, a nonadecyl group, an eicosyl group, a heneicosyl group, a behenyl group, and an oleyl group.

As a method of introducing the group R into General Formula (3), a method of reacting a fatty acid (note that the number of carbon atoms includes carbon atoms of a carbonyl group), an aliphatic alcohol, an aliphatic monoisocyanate, an aliphatic amine, an alkyl halide, or a fatty acid chloride with a hydroxy group, a carboxy group, a thiol group, or an amino group of the polyfunctional compound can be adopted. Thereby, a bond between the group Y and the group R is formed, and the group R can be introduced into General Formula (3).

Examples of the fatty acid include caprylic acid, capric acid, lauric acid, myristic acid, palmitic acid, stearic acid, arachidonic acid, behenic acid, lignoceric acid, palmitoleic acid, linoleic acid, arachidonic acid, oleic acid, and erucic acid.

Examples of the aliphatic alcohol include lauryl alcohol, tridecyl alcohol, myristyl alcohol, pentadecyl alcohol, cetanol, stearyl alcohol, eicosanol, heneicosanol, behenyl alcohol, and oleyl alcohol.

Examples of the aliphatic monoisocyanate include decyl isocyanate, undecyl isocyanate, dodecyl isocyanate, myristyl isocyanate, pentadecyl isocyanate, cetyl isocyanate, stearyl isocyanate, eicosyl isocyanate, and behenyl isocyanate.

Examples of the aliphatic amine include decylamine, laurylamine, myristyl amine, stearyl amine, behenyl amine, and oleyl amine.

Examples of the alkyl halide include dodecyl chloride, hexadecyl chloride, octadecyl chloride, dodecyl bromide, hexadecyl bromide, and octadecyl bromide.

Examples of the fatty acid chloride include caprylic acid chloride, capric acid chloride, lauric acid chloride, myristic acid chloride, palmitic acid chloride, stearic acid chloride, and oleyl acid chloride.

The isocyanate-reactive compound is preferably a reaction product of the polyfunctional compound and at least one selected from the group consisting of the fatty acid, the aliphatic alcohol, the aliphatic monoisocyanate, the aliphatic amine, the alkyl halide, and the fatty acid chloride described above. The reaction product has a hydrocarbon skeleton derived from the polyfunctional compound and has a functional group (preferably, a hydroxy group, an amino group, a carboxy group, or a thiol group) capable of reacting with an isocyanate group.

In the isocyanate-reactive compound, the number of functional groups capable of reacting with an isocyanate group in one molecule is preferably 1 to 7, more preferably 1 to 5, and further preferably 1 to 3.

Although not particularly limited, from the viewpoint of versatility, sorbitan fatty acid ester (such as sorbitan monostearate, sorbitan distearate, sorbitan tristearate, sorbitan tribehenate, or sorbitan trioleate), pentaerythritol fatty acid ester (such as pentaerythritol distearate), and citric acid ester (such as tristearyl citrate) can be preferably used.

The isocyanate-reactive compound (referred to as C2a, urethane-based (before isocyanate reaction) in some cases) described above can be further reacted with a polyisocyanate compound to impart excellent water repellency. For example, a method can be employed in which an isocyanate-reactive compound and a polyisocyanate compound (including a blocked isocyanate compound) are mixed, then treated (attached) to a base material (such as a fiber), and the two components are reacted on the base material by a heat treatment to impart water repellency.

It is also preferable to obtain a compound (referred to as C2b, urethane-based (after isocyanate reaction) in some cases) obtained by partially or completely reacting two components in advance, and then treat the compound on a base material. Although not particularly limited, examples thereof include compounds disclosed in JP 2017-533976 A (specifically, compounds described in Examples 1 to 143), and compounds described in US 2010/0,190,397 A (specifically, compounds described in Components 1 to 9; Reaction products (S)).

The water repellency-imparting compound (C) also preferably contains a silicone-based compound (referred to as C3 in some cases) having at least an alkyl group having 3 to 50 carbon atoms.

Although not particularly limited, examples thereof include silicone compounds such as dimethyl silicone, silanol terminated dimethyl silicone, methyl hydrogen silicone, and methyl phenyl silicone into which a hydrocarbon group having 3 to 50 carbon atoms is introduced.

The hydrocarbon group is preferably a linear or branched hydrocarbon group having 3 to 50 carbon atoms, and more preferably a linear hydrocarbon group. The hydrocarbon group is preferably an aliphatic hydrocarbon group, more preferably a saturated aliphatic hydrocarbon group, and particularly preferably an alkyl group. The number of carbon atoms in the hydrocarbon group is preferably 8 to 40, more preferably 10 to 32, particularly preferably 12 to 30, and most preferably 16 to 28.

As the silicone compound, commercially available alkyl-modified silicone, alkyl-aralkyl-modified silicone, alkyl-polyether-modified silicone, fatty acid amide-modified silicone, and fatty acid ester-modified silicone can be used.

Examples of the alkyl-modified silicone include KF-412, KF-413, KF-414, KF-415, KF-4003, KF-4701, KF-4917, KF-7235B, and X-22-7322 manufactured by Shin-Etsu Chemical Co., Ltd., BELSIL CDM 3526 VP, BELSIL CM 7026 VP, and BELSIL SDM5055 VP manufactured by Wacker Asahikasei Silicone Co., Ltd., and Silwax E1316, Silwax H416, Silwax B116, Silwax L118, Silwax J1022, Silwax D222, Silwax D226, Silwax D1026, Silwax J226, Silwax D026, Silwax J1032, Silwax D221M, Silwax J219M, J221M, Silwax Di-1021M, and Silwax 3H32 manufactured by Siltech Corporation.

Examples of the alkyl-aralkyl-modified silicone include X-22-1877 manufactured by Shin-Etsu Chemical Co., Ltd., WACKER TN manufactured by Wacker Asahikasei Silicone Co., Ltd., and Silwax 3H12-MS, Silwax 3H2-MS, Silwax 3H-MS, and Silwax D0-MS manufactured by Siltech Corporation.

Examples of the alkyl-polyether-modified silicone include Silube T308-16, Silube T310-A16, and Silube J208-812 manufactured by Siltech Corporation.

Examples of the fatty acid amide-modified silicone include KF-3935 manufactured by Shin-Etsu Chemical Co., Ltd.

Examples of the fatty acid ester-modified silicone include X-22-715 manufactured by Shin-Etsu Chemical Co., Ltd.

Examples thereof also include silicone compounds (specifically, organopolysiloxanes 1 to 3) in which a glycidyl group or an amino group is introduced, which described in US 2010/0,190,397 A.

### (Use Amount of Each Component)

The water repellent composition of the present invention may be a processing solution having a concentration for treating a fiber product as it is, or may be a stock solution used by being diluted with water before being used for treatment of a fiber product (for example, the stock solution is diluted 5 to 1000 times to be used as a processing solution).

In the water repellent composition of the present invention, the lower limit of a ratio (described as a mass ratio (component (AB)/component (C)) or a mass ratio (AB/C)) of the mass of the reaction product (AB) to the mass of the water repellency-imparting compound (C) is 0.05 or more, and is preferably 0.07 or more, more preferably 0.1 or more, further preferably 0.2 or more, particularly preferably 0.3 or more, and most preferably 0.4 or more. The upper limit may be 100 or less, and is preferably 30 or less, more preferably 20 or less, further preferably 15 or less, particularly preferably 10 or less, and most preferably 8 or less.

When the water repellent composition of the present invention is used as a processing solution having a concentration for treating a fiber product as it is, the content ratio of the reaction product (AB) in the water repellent composition of the present invention is preferably about 0.001 to 60 mass%, more preferably about 0.01 to 50 mass%, further preferably about 0.01 to 40 mass%, and particularly preferably about 0.01 to 35 mass%. The content ratio of the water repellency-imparting compound (C) is preferably about 0.001 to 60 mass%, more preferably about 0.01 to 50 mass%, further preferably about 0.01 to 40 mass%, and particularly preferably about 0.01 to 35 mass%.

When the water repellent composition of the present invention is used as a processing solution having a concentration for treating a fiber product as it is, the content ratio of water in the water repellent composition of the present invention may be appropriately selected in order to obtain the intended performance or in consideration of processability.

Each of the reaction product (AB) and the water repellency-imparting compound (C) can be prepared as an aqueous dispersion, and when the water repellent composition of the present invention is used as a processing solution having a concentration for treating a fiber product as it is, the water repellent composition of the present invention can be an aqueous dispersion in which the respective components are mixed by mixing the respective aqueous dispersions.

The water repellent composition of the present invention may contain other components in addition to the reaction product (AB), the water repellency-imparting compound (C), and water. Examples of the other components preferably include known components to be blended in the water repellent composition, such as a surfactant, an organic solvent, and other additives. The other components may be used singly or as a mixture of two or more kinds thereof. However, as described above, the water repellent composition of the present invention preferably does not contain a C8 fluorine-based water repellent (compound having a perfluoroalkyl group having 7 or more carbon atoms).

The water repellent composition of the present invention may contain, as the above-described other components, any additive as long as the effect of the present invention is produced. Examples of the additive include known additives such as a water repellent aid, a crosslinking agent (D), a softener, an anti-slip agent, an anti-wrinkle agent, a flame retardant, an antistatic agent, a fiber agent such as a heat resistance agent, an antioxidant, an ultraviolet absorber, a pigment, a metal powder pigment, a rheology control agent, a curing accelerator, a deodorant, and an antibacterial agent. Examples of the water repellent aid component include zirconium-based compounds, and zirconium acetate, zirconium hydrochloride, and zirconium nitrate are particularly preferable. As the anti-slip agent, a known anti-slip agent can be used, and for example, colloidal silica or fumed silica can be used, and in addition thereto, silicone resin compounds (compounds described in paragraphs [0059] to [0063] of Japanese Patent Laid-open Publication No. 2018-104866; such as MQ resin, MT resin, and MDT resin), or hydrophobically treated or hydrophobically treated and hydrophilically treated silica described in Japanese Patent Laid-open Publication Nos. 2017-206775 and 2018-104866 can also be preferably used. These additives can be used singly or in an appropriate combination of two or more kinds thereof.

Examples of the crosslinking agent (D) include an epoxy-based crosslinking agent, a carbodiimide-based crosslinking agent, an oxazoline-based crosslinking agent, a glyoxal-based crosslinking agent, a melamine-based crosslinking agent, and an isocyanate-based crosslinking agent (also including a blocked isocyanate-based crosslinker in which an isocyanate group is protected with a blocking agent). An isocyanate-based crosslinking agent (D1) (described as a polyisocyanate compound (D1) in some cases) is different from the reaction product (AB). Specifically, the isocyanate-based crosslinking agent (D1) has at least one of an isocyanate group and a blocked isocyanate group, and when the isocyanate-based crosslinking agent (D1) is a reaction product of a polyol compound and a polyisocyanate compound, the polyol compound has none of an ether group, a carbonate group, and an ester group, and a molar ratio of the isocyanate group in the polyisocyanate compound to the hydroxyl group in the polyol compound is less than 2.1.

### (Isocyanate-Based Crosslinking Agent (D1))

As the isocyanate-based crosslinking agent (D1), the polyisocyanate compound (B) can be used singly or in an appropriate combination of two or more kinds thereof. The crosslinkable functional group of the isocyanate-based crosslinking agent (D1) is specifically an isocyanate group or a blocked isocyanate group.

As the polyisocyanate compound constituting the isocyanate-based crosslinking agent (D1), a blocked polyisocyanate compound in which 50 mol% or more, preferably 60 mol% or more, and further preferably 70 mol% or more of the isocyanate group is blocked with a blocking agent can be suitably used. As the blocked isocyanate compound, various known blocked isocyanates can be used, and the blocked isocyanate compound can be prepared by reacting various known isocyanate compounds with various known blocking agents.

The blocking agent to be introduced into the isocyanate compound is the same as the blocking agent described above.

The isocyanate-based crosslinking agent (D1) may have self-emulsifiability, and as the polyisocyanate compound having self-emulsifiability, for example, an isocyanate compound in which a nonionic hydrophilic group, a cationic hydrophilic group, or an anionic hydrophilic group is introduced into a part of the isocyanate compound can be used, and a polyisocyanate compound in which a nonionic hydrophilic group having an oxyethylene group is introduced can be preferably used. Examples of the hydrophilic compound reacted with the isocyanate compound for imparting self-emulsifiability include polyoxyalkylene monoalkyl ethers such as polyethylene glycol monomethyl ether, polyethylene glycol monoethyl ether, polyethylene glycol polypropylene glycol monomethyl ether, and polypropylene glycol polyethylene glycol monobutyl ether; (poly)ethylene glycols such as ethylene glycol or diethylene glycol, triethylene glycol, and triethylene glycol; block copolymers or random copolymers of polyethylene glycol, polypropylene glycol, and polytetramethylene glycol, and random copolymers or block copolymers of ethylene oxide and propylene oxide and ethylene oxide and butylene oxide; polyoxyalkylene monoamines, and polyoxyalkylene diamines, and polyethylene glycol monomethyl ether, and polyethylene glycol monoethyl ether are preferably used. The nonionic hydrophilic compounds may be used singly or in combination of two or more kinds thereof. By introducing these compounds in a predetermined amount with respect to the isocyanate group, self-emulsifiability can be imparted to the polyisocyanate compound. The introduction amount of these compounds is preferably 1 mol% or more as a lower limit, is preferably 50 mol% or less, more preferably 40 mol% or less, and further preferably 30 mol% or less as an upper limit, and is preferably about 1 to 50 mol%, more preferably about 1 to 40 mol%, and further preferably about 1 to 30 mol% as a range, with respect to the isocyanate group.

As described above, the water repellent composition of the present invention can be an aqueous dispersion in which at least the reaction product (AB) of the polyol compound (A) and the isocyanate compound (B) and the water repellency-imparting compound (C) are dispersed in water. These aqueous dispersions can be produced by mixing the aqueous dispersions of the respective components.

In the present invention, the aqueous dispersions of the respective components may be produced by a known method, and examples thereof include a method in which each component and a surfactant are mixed, and then water is added to disperse the components and the surfactant, and a method in which each component and a surfactant are mechanically dispersed using a known dispersing machine. As the dispersing machine, a homomixer, a homogenizer, a colloid mill, a line mixer, or a bead mill can be used. In the case of water-dispersing, a known organic solvent may be added. When an organic solvent is used, a solvent removal step (such as distillation under reduced pressure) may be provided as necessary.

As the surfactant, one or more of a nonionic surfactant, an anionic surfactant, a cationic surfactant, and an amphoteric surfactant can be used.

Examples of the nonionic surfactant include polyoxyethylene alkyl ether, polyoxyethylene alkylphenyl ether, polyoxyethylene fatty acid ester, sorbitan fatty acid ester, polyoxyethylene sorbitan fatty acid ester, polyoxyethylene sorbitol fatty acid ester, glycerin fatty acid ester, polyoxyethylene glycerin fatty acid ester, polyglycerin fatty acid ester, sucrose fatty acid ester, polyoxyethylene alkylamine, polyoxyethylene fatty acid amide, fatty acid alkylolamide, alkylalkanolamide, acetylene glycol, oxyethylene adduct of acetylene glycol, and polyethylene glycol polypropylene glycol block copolymer.

Examples of the anionic surfactant include sulfate salts of higher alcohols, higher alkyl sulfonates, higher carboxylates, alkylbenzene sulfonates, polyoxyethylene alkyl sulfates, polyoxyethylene alkyl phenyl ether sulfates, and vinyl sulfosuccinates.

Examples of the cationic surfactant include amine salts, amidoamine salts, quaternary ammonium salts, and imidazolinium salts. Specific examples thereof include, but are not particularly limited to, amine salt type surfactants such as alkylamine salts, polyoxyethylene alkylamine salts, alkylamidoamine salts, amino alcohol fatty acid derivatives, polyamine fatty acid derivatives, and imidazoline, and quaternary ammonium salt type surfactants such as alkyltrimethylammonium salts, dialkyldimethylammonium salts, alkyldimethylbenzylammonium salts, alkylpyridinium salts, alkylisoquinolinium salts, and benzethonium chloride.

Examples of the amphoteric surfactant include alkylamine oxides, alanines, imidazolinium betaines, amidobetaines, and betaine acetate, and specific examples thereof include long-chain amine oxide, lauryl betaine, stearyl betaine, laurylcarboxymethyl hydroxyethyl imidazolinium betaine, lauryl dimethylaminoacetic acid betaine, and fatty acid amidopropyl dimethylaminoacetic acid betaine.

When the water repellent composition of the present invention contains a surfactant, the content thereof can be appropriately selected according to the purpose. Although not particularly limited, for example, the content for forming the water system is preferably about 0.1 to 30 parts by mass, more preferably about 0.2 to 25 parts by mass, further preferably about 0.3 to 20 parts by mass, particularly preferably about 0.4 to 15 parts by mass, and most preferably about 0.5 to 10 parts by mass, with respect to 100 parts by mass of the solid content of the water repellent composition.

When the surfactant is the compound described in the water repellency-imparting compound (C), the surfactant is included in the concept of the water repellency-imparting compound (C). Examples of such a surfactant include sorbitan fatty acid esters and polyoxyethylene sorbitan fatty acid esters.

As described above, in the present invention, the form of the kit may be employed.

The two-agent type kit of the present invention is used for preparing the water repellent composition of the present invention described above. Therefore, the types, and contents of the reaction product (AB), the water repellency-imparting compound (C), and the other components are the same as those of the water repellent of the present invention described above.

### 2. Water Repellent Fiber Product

A water repellent fiber product of the present invention is treated with the water repellent composition of the present invention described above. That is, the water repellent fiber product of the present invention is manufactured by bringing the water repellent composition of the present invention into contact with a fiber product. The details of the water repellent composition of the present invention are as described above.

The fiber product treated with the water repellent composition of the present invention is not particularly limited as long as it is an article composed of fibers, and examples thereof include natural fibers such as cotton, silk, hemp, and wool, synthetic fibers such as polyester, nylon, acrylic, and spandex, and fiber products using these. The form and shape of the fiber product are not limited, and the fiber product is not limited to raw material shapes such as staples, filaments, tows, and yarns, and may be in various processing forms such as woven fabrics, knitted fabrics, batting, nonwoven fabrics, paper, sheets, and films.

Using the water repellent composition of the present invention, a fiber product (such as cloth) can be subjected to a water repellent treatment by a known method. Examples of the method for treating a fiber product with the water repellent composition of the present invention include a continuous method and a batch method. When the water repellent composition of the present invention is a stock solution, the water repellent composition is diluted with water to prepare a processing solution so as to have a concentration (for example, a solid content concentration of about 0.01 to 6 mass%) suitable for treatment.

As the continuous method, it is also preferable to optionally add various agents such as a crosslinking agent in addition to water when the processing solution is prepared. Next, an object to be treated (that is, a fiber product) is continuously fed to an impregnation device filled with the processing solution to impregnate the object to be treated with the processing solution, and then the unnecessary processing solution is removed. The impregnation device is not particularly limited, and a padder, a kiss roll type applicator, a gravure coater type applicator, a spray type applicator, a foam type applicator, and a coating type applicator can be preferably employed, and a padder type is particularly preferable. Subsequently, an operation of removing water remaining on the object to be treated is performed using a dryer. The dryer is not particularly limited, and an expansion dryer such as a hot flue or a tenter is preferable. The continuous method is preferably employed when the object to be treated is cloth such as a woven fabric.

The batch method includes a step of immersing an object to be treated in a processing solution and a step of removing water remaining on the treated object. The batch method is preferably employed when the object to be treated is not cloth, for example, is bulk fiber, top, sliver, hank, tow, or thread, or when the object to be treated is not suitable for a continuous method such as a knit fabric. In the immersion step, it is preferred to use, for example, a cotton dyeing machine, a cheese dyeing machine, a jet dyeing machine, an industrial washing machine, or a beam dyeing machine. In operation of removing water, a hot air dryer such as a cheese dyeing machine, a beam dyeing machine, or a tumble dryer, and a high-frequency dryer can be used. The object to be treated to which the water repellent composition of the present invention is attached is preferably subjected to a dry-heat treatment.

The temperature of the dry-heat treatment is preferably 120 to 180°C and particularly preferably 160 to 180°C. The time for the dry-heat treatment may be about 10 seconds to 10 minutes, and is preferably 30 seconds to 3 minutes and particularly preferably 1 to 2 minutes. A step of preliminarily drying at about 80 to 120°C may be provided before the dry-heat treatment is performed under the above conditions. The dry-heat treatment method is not particularly limited, but a tenter is preferable when the object to be treated is cloth.

The water repellent fiber product may be subjected to a coating treatment. As described above, examples of the coating agent applied to the water repellent fiber product include an acrylic resin and a urethane resin. The coating of the water repellent fiber product is performed, for example, for improving waterproofness (water resistance) and adjusting air permeability, texture, and moisture permeability, and can be selected in various ways in order to obtain the intended performance.

### EXAMPLES

Hereinafter, the present invention will be specifically described with reference to Examples and Comparative Examples. However, the present invention is not limited to Examples. In the following Examples, "%" means "mass%" unless specified otherwise.

### Preparation of Aqueous Dispersion of Reaction Product (AB)

### <Production Example AB-1>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 12.5 g (0.186 mol of OH group) of dipropylene glycol, 14.9 g (0.007 mol of OH group) of polyoxyethylene monomethyl ether (average molecular weight: 2000 g/mol), and 100 g of acetone were charged, and stirred and mixed at room temperature. The internal temperature was raised to 60°C, 0.05 g of NEOSTANN U-600 (manufactured by Nitto Kasei Co., Ltd.) as a catalyst was added, and the mixture was reacted until the isocyanate content ratio reached 6.8%. After cooling to 40°C, 35.2 g (0.366 mol of NH group) of 3,5-dimethylpyrazole was added, and the mixture was reacted until the isocyanate content ratio reached 0%. The mixture was cooled to an internal temperature of 30°C, and 480 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-2>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 60.6 g (0.187 mol of OH group) of PTMG-650 (polytetramethylene ether glycol, manufactured by Mitsubishi Chemical Corporation, average molecular weight: 650 g/mol), 14.9 g (0.007 mol of OH group) of polyoxyethylene monomethyl ether (average molecular weight: 2000 g/mol), and 150 g of acetone were charged, and stirred and mixed at room temperature. The internal temperature was raised to 60°C, 0.18 g of NEOSTANN U-600 (manufactured by Nitto Kasei Co., Ltd.) as a catalyst was added, and the mixture was reacted until the isocyanate content ratio reached 4.7%. After cooling to 40°C, 35.1 g (0.365 mol of NH group) of 3,5-dimethylpyrazole was added, and the mixture was reacted until the isocyanate content ratio reached 0%. The mixture was cooled to an internal temperature of 30°C, and 650 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-3>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 8.4 g (0.187 mol of OH group) of 1,4-butanediol, 14.9 g (0.007 mol of OH group) of polyoxyethylene monomethyl ether (average molecular weight: 2000 g/mol), and 100 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 6.9%. After cooling to 40°C, 35.1 g (0.365 mol of NH group) of 3,5-dimethylpyrazole was added, and the mixture was reacted until the isocyanate content ratio reached 0%. The mixture was cooled to an internal temperature of 30°C, and 480 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-4>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 8.4 g (0.187 mol of OH group) of 1,4-butanediol, 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 100 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 6.3%. After cooling to 40°C, 32.6 g (0.339 mol of NH group) of 3,5-dimethylpyrazole was added, and the mixture was reacted until the isocyanate content ratio reached 0%. The mixture was cooled to an internal temperature of 30°C, and 480 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-5>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 60.6 g (0.187 mol of OH group) of PTMG-650 (polytetramethylene ether glycol, manufactured by Mitsubishi Chemical Corporation, average molecular weight: 650 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 135 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 4.5%. After cooling to 40°C, 32.6 g (0.339 mol of NH group) of 3,5-dimethylpyrazole was added, and the mixture was reacted until the isocyanate content ratio reached 0%. The mixture was cooled to an internal temperature of 30°C, and 650 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-6>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 23.3 g (0.222 mol of OH group) of PTMG-250 (polytetramethylene ether glycol, manufactured by Mitsubishi Chemical Corporation, average molecular weight: 210 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 90 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 5.5%. After cooling to 40°C, 29.2 g (0.304 mol of NH group) of 3,5-dimethylpyrazole was added, and the mixture was reacted until the isocyanate content ratio reached 0%. The mixture was cooled to an internal temperature of 30°C, and 550 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-7>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 37.3 g (0.187 mol of OH group) of SANNIX PP-400 (polyoxypropylene glycol, manufactured by Sanyo Chemical Industries, Ltd., average molecular weight: 400 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 110 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 5.4%. After cooling to 40°C, 32.6 g (0.339 mol of NH group) of 3,5-dimethylpyrazole was added, and the mixture was reacted until the isocyanate content ratio reached 0%. The mixture was cooled to an internal temperature of 30°C, and 600 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-8>

Into a flask, 93.3 g (0.187 mol of OH group) of ETERNACOLL UC-100 (polycarbonate diol; main skeleton cyclohexanedimethanol, manufactured by Ube Industries, Ltd., average molecular weight: 1000 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 140 g of acetone were charged, heated to an internal temperature of 60°C, and stirred and mixed. Thereafter, 100 g (0.560 mol of NCO group) of Duranate 24A-100 (a biuret form of hexamethylene diisocyanate, manufactured by Asahi Kasei Chemicals Corporation, NCO% = 23.5) was added and mixed, 0.14 g of NEOSTANN U-600 (manufactured by Nitto Kasei Co., Ltd.) as a catalyst was further added, and the mixture was reacted until the isocyanate content ratio reached 4.0%. After cooling to 40°C, 32.6 g (0.339 mol of NH group) of 3,5-dimethylpyrazole was added, and the mixture was reacted until the isocyanate content ratio reached 0%. The mixture was cooled to an internal temperature of 30°C, and 800 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-9>

Into a flask, 93.3 g (0.187 mol of OH group) of BENEBiOL NL1010DB (polycarbonate diol; main skeleton 1,4-butanediol·1,10-decanediol, manufactured by Mitsubishi Chemical Corporation, average molecular weight: 1000 g/mol), 29.8 g (0.015 mol of OH group) of polyoxyethylene monomethyl ether (average molecular weight: 2000 g/mol), and 170 g of acetone were charged, heated to an internal temperature of 60°C, and stirred and mixed. Thereafter, 100 g (0.560 mol of NCO group) of Duranate 24A-100 (a biuret form of hexamethylene diisocyanate, manufactured by Asahi Kasei Chemicals Corporation, NCO% = 23.5) was added and mixed, 0.09 g of NEOSTANN U-600 (manufactured by Nitto Kasei Co., Ltd.) as a catalyst was further added, and the mixture was reacted until the isocyanate content ratio reached 3.8%. After cooling to 40°C, 34.4 g (0.358 mol of NH group) of 3,5-dimethylpyrazole was added, and the mixture was reacted until the isocyanate content ratio reached 0%. The mixture was cooled to an internal temperature of 30°C, and 760 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-10>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 93.3 g (0.187 mol of OH group) of KURARAY POLYOL P-1012 (polyester diol; polycondensate of 3-methyl-1,5-pentanediol, adipic acid, and isophthalic acid, manufactured by Kuraray Co., Ltd., average molecular weight: 1000 g/mol), 29.8 g (0.015 mol of OH group) of polyoxyethylene monomethyl ether (average molecular weight: 2000 g/mol), and 170 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 3.8%. After cooling to 40°C, 34.4 g (0.358 mol of NH group) of 3,5-dimethylpyrazole was added, and the mixture was reacted until the isocyanate content ratio reached 0%. The mixture was cooled to an internal temperature of 30°C, and 620 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-11>

Into a flask, 100 g (0.314 mol of NCO group) of CORONATE L (a trimethylolpropane adduct of tolylene diisocyanate (molar ratio: 3 : 1), manufactured by Tosoh Corporation, NCO% = 13.4, an ethyl acetate solution having a solid content concentration of 75%), 34 g (0.105 mol of OH group) of PTMG-650 (polytetramethylene ether glycol, manufactured by Mitsubishi Chemical Corporation, average molecular weight: 650 g/mol), 8.4 g (0.004 mol of OH group) of polyoxyethylene monomethyl ether (average molecular weight: 2000 g/mol), and 130 g of acetone were charged, and stirred and mixed at room temperature. The internal temperature was raised to 60°C, 0.002 g of NEOSTANN U-600 (manufactured by Nitto Kasei Co., Ltd.) as a catalyst was added, and the mixture was reacted until the isocyanate content ratio reached 3.2%. After cooling to 40°C, 17.9 g (0.205 mol) of methyl ethyl ketone oxime was slowly added using a dropping funnel, and the mixture was reacted until the isocyanate content ratio reached 0%. The mixture was cooled to an internal temperature of 30°C, and 740 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-12>

Into a flask, 100 g (0.412 mol of NCO group) of VESTANAT T1890/100 (an isocyanurate form of isophorone diisocyanate, manufactured by Evonik, NCO% = 17.3) and 140 g of acetone were charged, heated to an internal temperature of 45°C, and stirred and mixed. Thereafter, 44.6 g (0.137 mol of OH group) of PTMG-650 (polytetramethylene ether glycol, manufactured by Mitsubishi Chemical Corporation, average molecular weight: 650 g/mol) and 22 g (0.011 mol of OH group) of polyoxyethylene monomethyl ether (average molecular weight: 2000 g/mol) were added, the internal temperature was raised to 60°C, 0.09 g of NEOSTANN U-600 (manufactured by Nitto Kasei Co., Ltd.) as a catalyst was added, and the mixture was reacted until the isocyanate content ratio reached 3.6%. After cooling to 40°C, 23 g (0.264 mol) of methyl ethyl ketone oxime was slowly added using a dropping funnel, and the mixture was reacted until the isocyanate content ratio reached 0%. The mixture was cooled to an internal temperature of 30°C, and 560 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-13>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 60.6 g (0.187 mol of OH group) of PTMG-650 (polytetramethylene ether glycol, manufactured by Mitsubishi Chemical Corporation, average molecular weight: 650 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 130 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 4.6%. After cooling to 40°C, 29.6 g (0.339 mol) of methyl ethyl ketone oxime was slowly added using a dropping funnel, and the mixture was reacted until the isocyanate content ratio reached 0%. The mixture was cooled to an internal temperature of 30°C, and 640 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-14>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 60.6 g (0.187 mol of OH group) of PTMG-650 (polytetramethylene ether glycol, manufactured by Mitsubishi Chemical Corporation, average molecular weight: 650 g/mol), 14.9 g (0.007 mol of OH group) of polyoxyethylene monomethyl ether (average molecular weight: 2000 g/mol), 3.7 g (0.026 mol of OH group) of polyoxypropylene trimethylolpropane ether (hydroxyl value: 398 mgKOH/g), and 140 g of acetone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 4.5%. After cooling to 40°C, 35.6 g (0.339 mol of NH group) of diethanolamine (hereinafter, referred to as DEA) was slowly added using a dropping funnel, and the mixture was reacted until the isocyanate content ratio reached 0%. The mixture was cooled to an internal temperature of 30°C, and 640 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-15>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 60.6 g (0.187 mol of OH group) of PTMG-650 (polytetramethylene ether glycol, manufactured by Mitsubishi Chemical Corporation, average molecular weight: 650 g/mol), and 130 g of methyl isobutyl ketone were charged, and stirred and mixed at room temperature. The internal temperature was raised to 60°C, 0.09 g of NEOSTANN U-600 (manufactured by Nitto Kasei Co., Ltd.) as a catalyst was added, and the mixture was reacted until the isocyanate content ratio reached 5.4%. After cooling to 40°C, 35.9 g (0.373 mol of NH group) of 3,5-dimethylpyrazole was added, and the mixture was reacted until the isocyanate content ratio reached 0%. The mixture was cooled to an internal temperature of 30°C, 88 g of propylene glycol monomethyl ether and 15.2 g of ethylene oxide 40 mol adduct of tristyrenated phenol were added thereto and mixed. Thereafter, 500 g of ion-exchanged water was charged, and the mixture was water-dispersed by a high-pressure homogenizer (400 bar). Thereafter, ion-exchanged water was added to obtain an aqueous dispersion having a solid content concentration of 21.5%.

### <Production Example AB-16>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 14.9 g (0.007 mol of OH group) of polyoxyethylene monomethyl ether (average molecular weight: 2000 g/mol), and 200 g of acetone were charged, and stirred and mixed at room temperature. The internal temperature was raised to 40°C, and 31.4 g (0.327 mol of NH group) of 3,5-dimethylpyrazole was added. The internal temperature was raised to 60°C, 0.09 g of NEOSTANN U-600 (manufactured by Nitto Kasei Co., Ltd.) as a catalyst was added, and the mixture was reacted until the isocyanate content ratio reached 2.7%. 42.8 g (0.304 mol of OH group) of polyoxypropylene trimethylolpropane ether (hydroxyl value: 398 mgKOH/g) was added, and the mixture was reacted until the isocyanate content ratio reacted 0%. The mixture was cooled to an internal temperature of 30°C, and 580 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-17>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 14.9 g (0.007 mol of OH group) of polyoxyethylene monomethyl ether (average molecular weight: 2000 g/mol), and 200 g of acetone were charged, and stirred and mixed at room temperature. The internal temperature was raised to 40°C, and 29.8 g (0.310 mol of NH group) of 3,5-dimethylpyrazole was added. The internal temperature was raised to 60°C, 0.09 g of NEOSTANN U-600 (manufactured by Nitto Kasei Co., Ltd.) as a catalyst was added, and the mixture was reacted until the isocyanate content ratio reached 2.9%. 60.3 g (0.429 mol of OH group) of polyoxypropylene trimethylolpropane ether (hydroxyl value: 398 mgKOH/g) was added, and the mixture was reacted until the isocyanate content ratio reacted 0%. The mixture was cooled to an internal temperature of 30°C, and 580 g of ion-exchanged water was added dropwise to water-disperse the mixture. Acetone was distilled off under reduced pressure, and ion-exchanged water was added to obtain an aqueous dispersion having a solid content concentration of 20%.

### <Production Example AB-18>

Into a flask, 100 g (0.560 mol of NCO group) of Duranate 24A-100 (a biuret form of hexamethylene diisocyanate, manufactured by Asahi Kasei Chemicals Corporation, NCO% = 23.5), 14.9 g (0.007 mol of OH group) of polyoxyethylene monomethyl ether (average molecular weight: 2000 g/mol), and 200 g of acetone were charged, and stirred and mixed at room temperature. The internal temperature was raised to 40°C, and 35.6 g (0.370 mol of NH group) of 3,5-dimethylpyrazole was added. The internal temperature was raised to 60°C, 0.09 g of NEOSTANN U-600 (manufactured by Nitto Kasei Co., Ltd.) as a catalyst was added, and the mixture was reacted until the isocyanate content ratio reached 2.2%. 78.3 g (0.556 mol of OH group) of polyoxypropylene trimethylolpropane ether (hydroxyl value: 398 mgKOH/g) was added, and the mixture was reacted until the isocyanate content ratio reacted 0%. The mixture was cooled to an internal temperature of 30°C, and 580 g of ion-exchanged water was added dropwise to water-disperse the mixture. Acetone was distilled off under reduced pressure, and ion-exchanged water was added to obtain an aqueous dispersion having a solid content concentration of 20%.

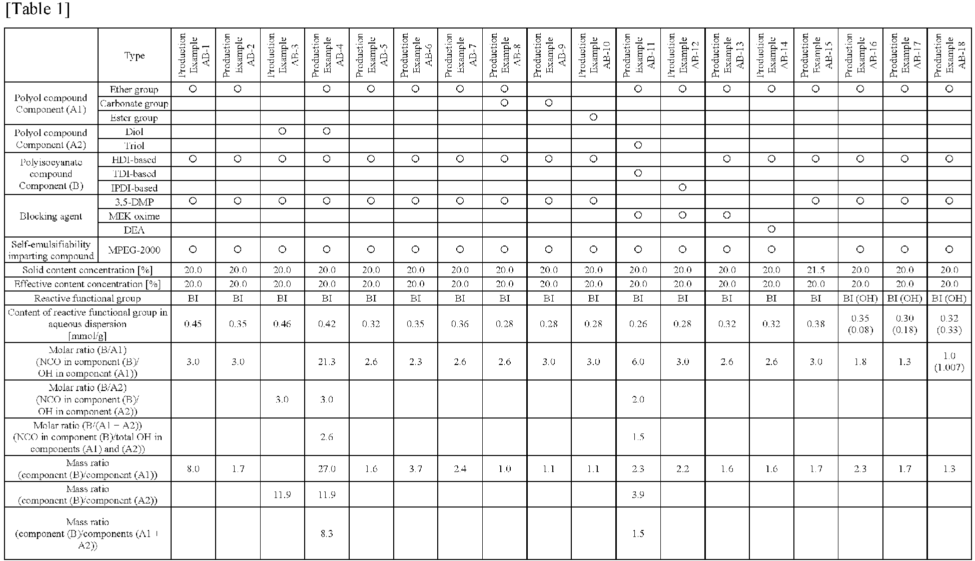

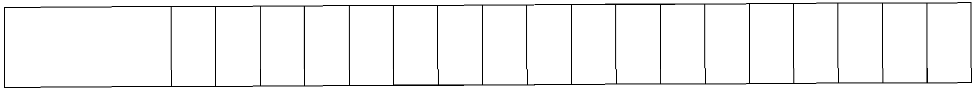

In Table 1, "HDI" means hexamethylene diisocyanate, "TDI" means tolylene diisocyanate, "IPDI" means isophorone diisocyanate, "DMP" means dimethylpyrazole, "MEK" means methyl ethyl ketone, "DEA" means diethanolamine, "MPEG" means polyoxyethylene monomethyl ether, and "BI" means a blocked isocyanate group. In Table 1, in the notation "NCO in component (B)", NCO is a blocked isocyanate group (BI).

### Preparation of Aqueous Dispersion of Water Repellency-Imparting Compound (C)

### <Production Example C-1>

In an autoclave, 83 g of stearyl acrylate, 2 g of 2-hydroxyethyl methacrylate, 1 g of stearyl trimethyl ammonium chloride, 6 g of polyoxyethylene (addition mole number of EO: 7 mol) lauryl ether, 2 g of polyoxyethylene (addition mole number of EO: 21 mol) lauryl ether, 0.1 g of dodecyl mercaptan, 30 g of dipropylene glycol, and 190 g of ion-exchanged water were charged and water-dispersed at 50°C by high-speed stirring. Thereafter, the resultant product was treated by a high-pressure homogenizer (400 bar) while maintaining the temperature at 40°C to obtain an aqueous dispersion. After the inside of the autoclave was replaced with nitrogen, 15 g of vinyl chloride was charged by press-fitting, 0.3 g of azobis(isobutyramidine) dihydrochloride was added, and the resultant product was reacted at 60°C for 10 hours under a nitrogen atmosphere. Ion-exchanged water was added to adjust the solid content concentration to 21.8%, thereby obtaining an aqueous dispersion of an acrylic polymer.

### <Production Example C-2>

In a flask, 98 g of stearyl acrylate, 2 g of 2-hydroxyethyl methacrylate, 1 g of stearyl trimethyl ammonium chloride, 6 g of polyoxyethylene (addition mole number of EO: 7 mol) lauryl ether, 2 g of polyoxyethylene (addition mole number of EO: 21 mol) lauryl ether, 0.1 g of dodecyl mercaptan, 30 g of dipropylene glycol, and 190 g of ion-exchanged water were charged and water-dispersed at 50°C by high-speed stirring. Thereafter, the resultant product was treated by a high-pressure homogenizer (400 bar) while maintaining the temperature at 40°C to obtain an aqueous dispersion. To this emulsion, 0.3 g of azobis(isobutyramidine) dihydrochloride was added, and the resultant product was reacted at 60°C for 10 hours under a nitrogen atmosphere. Ion-exchanged water was added to adjust the solid content concentration to 21.8%, thereby obtaining an aqueous dispersion of an acrylic polymer.

### <Production Example C-3>

In a flask, 94 g of stearyl acrylate, 4 g of KF-2012 (a radically reactive organopolysiloxane macromonomer, manufactured by Shin-Etsu Chemical Co., Ltd.), 2 g of 2-hydroxyethyl methacrylate, 1 g of stearyl trimethyl ammonium chloride, 6 g of polyoxyethylene (addition mole number of EO: 7 mol) lauryl ether, 2 g of polyoxyethylene (addition mole number of EO: 21 mol) lauryl ether, 0.1 g of dodecyl mercaptan, 30 g of dipropylene glycol, and 190 g of ion-exchanged water were charged and water-dispersed at 50°C by high-speed stirring. Thereafter, the resultant product was treated by a high-pressure homogenizer (400 bar) while maintaining the temperature at 40°C to obtain an aqueous dispersion. To this emulsion, 0.3 g of azobis(isobutyramidine) dihydrochloride was added, and the resultant product was reacted at 60°C for 10 hours under a nitrogen atmosphere. Ion-exchanged water was added to adjust the solid content concentration to 21.8%, thereby obtaining an aqueous dispersion of an acryl-silicone polymer.

### <Production Example C-4>

To a flask, 117 g of BELSIL CDM 3526 VP (alkyl (C26-28)-modified silicone; melting point: about 35°C (paste form), manufactured by Wacker Asahikasei Silicone Co., Ltd.) and 63 g of methyl isobutyl ketone were added and melted at 60°C. In 400 g of ion-exchanged water, 5.7 g of ethylene oxide 30 mol adduct of stearylamine and 1.8 g of acetic acid (90% aqueous solution) were dissolved at 60°C and added dropwise. The resultant product was water-dispersed by a high-pressure homogenizer (400 bar) while maintaining the temperature. Thereafter, methyl isobutyl ketone was distilled off under reduced pressure, and ion-exchanged water was added to obtain an aqueous dispersion having a solid content concentration of 21%.

### <Production Example C-5>

To a flask, 117 g of Silwax D226 (alkyl (C26-28)-modified silicone; melting point: about 54°C (wax form), manufactured by Siltech Corporation) and 63 g of methyl isobutyl ketone were added and melted at 70°C. In 400 g of ion-exchanged water, 5.7 g of ethylene oxide 30 mol adduct of stearylamine and 1.8 g of acetic acid (90% aqueous solution) were dissolved at 60°C and added dropwise. The resultant product was water-dispersed by a high-pressure homogenizer (400 bar) while maintaining the temperature. Thereafter, methyl isobutyl ketone was distilled off under reduced pressure, and ion-exchanged water was added to obtain an aqueous dispersion having a solid content concentration of 21%.

### <Production Example C-6>

To a flask, 117 g of EMASOL S-30V (sorbitan tristearate; hydroxyl value: 67.9 mgKOH/g, Kao Corporation) and 63 g of methyl isobutyl ketone were added and melted at 60°C. In 400 g of ion-exchanged water, 5.7 g of ethylene oxide 30 mol adduct of stearylamine and 1.8 g of acetic acid (90% aqueous solution) were dissolved at 60°C and added dropwise. The resultant product was water-dispersed by a high-pressure homogenizer (400 bar) while maintaining the temperature. Thereafter, methyl isobutyl ketone was distilled off under reduced pressure, and ion-exchanged water was added to obtain an aqueous dispersion having a solid content concentration of 21%.

### <Production Example C-7>

In an autoclave, 47.5 g of stearyl acrylate, 2.5 g of glycidyl methacrylate, 145 g of pure water, 15 g of tripropylene glycol, 1.5 g of sorbitan monooleate, 2 g of polyoxyethylene (addition mole number of EO: 18 mol) secondary alkyl (C12-14) ether, and 1.5 g of dioctadecyldimethylammonium chloride were charged, and emulsified and dispersed with ultrasonic waves at 60°C for 15 minutes under stirring. After the inside of the autoclave was replaced with nitrogen, 0.5 g of 2,2-azobis(2-amidinopropane) dihydrochloride was added, and the resultant product was reacted at 60°C for 3 hours. Ion-exchanged water was added to adjust the solid content concentration to 21.3%, thereby obtaining an aqueous dispersion of an acrylic polymer.

### <Production Example C-8>

To a flask, 70 g (0.09 mol of OH group) of EMASOL S-30V (sorbitan tristearate; hydroxyl value: 68.6 mgKOH/g, Kao Corporation) and 80 g of methyl isobutyl ketone were added and melted at 50°C. Subsequently, 17 g (0.09 mol of NCO group) of Duranate 24A-100 (a biuret form of hexamethylene diisocyanate, manufactured by Asahi Kasei Chemicals Corporation, NCO% = 23.5) and 10 mg of diazabicycloundecene were added and heated to 80°C, and the mixture was reacted until the isocyanate content ratio reached 0%. To 220 g of ion-exchanged water, 3.1 g of dimethylstearylamine, 2.1 g of acetic acid (90% aqueous solution), and 1.6 g of Tergitol TMN-10 (polyethylene glycol trimethylnonyl ether, manufactured by The Dow Chemical Company, 90% aqueous solution) were dissolved at 60°C and added dropwise. The resultant product was water-dispersed by a high-pressure homogenizer (400 bar) while maintaining the temperature. Thereafter, methyl isobutyl ketone was distilled off under reduced pressure, and ion-exchanged water was added to obtain an aqueous dispersion having a solid content concentration of 21%.

The water repellency-imparting compound (C) produced in each of the above Production Examples is as shown in Table 2.

**[Table 2]**

| | Production Example | Component notation | Type | Solid content concentration [%] | Effective content concentration [%] |
|---|---|---|---|---|---|
| Non-fluorine-based water repellency-imparting compound Component (C) | Production Example C-1 | C1b | Acrylic polymer | 21.8 | 20.0 |
| | Production Example C-2 | C1b | Acrylic polymer | 21.8 | 20.0 |
| | Production Example C-3 | C1b + C1c | Acryl-silicone polymer | 21.8 | 20.0 |
| | Production Example C-4 | C3 | Alkyl-modified silicone | 21.0 | 20.0 |
| | Production Example C-5 | C3 | Alkyl-modified silicone | 21.0 | 20.0 |
| | Production Example C-6 | C2a | Urethane-based (before isocyanate reaction) | 21.0 | 20.0 |
| | Production Example C-7 | C1b, C2a | Acrylic polymer, Urethane-based (before isocyanate reaction) | 21.3 | 20.0 |
| | Production Example C-8 | C2b | Urethane-based (after isocyanate reaction) | 21.0 | 20.0 |

### Preparation of Aqueous Dispersion of Isocyanate-Based Crosslinking Agent (D1)

### <Production Example D-1>

Into a flask, 100 g (0.560 mol of NCO group) of Duranate 24A-100 (a biuret form of hexamethylene diisocyanate, manufactured by Asahi Kasei Chemicals Corporation, NCO% = 23.5) and 65.9 g of methyl isobutyl ketone were charged, and stirring was started. Thereinto, 53.8 g (0.560 mol) of 3,5-dimethylpyrazole was charged, and the mixture was held at 50°C and reacted until the isocyanate content reached 0 to obtain a blocked isocyanate compound. 30.8 g of methyl isobutyl ketone, 65.9 g of propylene glycol monomethyl ether, and 0.31 g of stearyl trimethyl ammonium chloride as a cationic surfactant were mixed to obtain a uniform solution. After 175.8 g of ion-exchanged water was gradually charged while stirring, the resultant product was water-dispersed by a high-pressure homogenizer (400 bar). Thereafter, the organic solvent was distilled off under reduced pressure, and ion-exchanged water was added to obtain an aqueous dispersion of the isocyanate compound having a solid content concentration of 20% (Table 3).

### (Production Example D-2)

To a flask, 20.0 g (0.064 mol of NCO group) of CORONATE L (a trimethylolpropane adduct of tolylene diisocyanate (molar ratio: 3 : 1), manufactured by Tosoh Corporation, NCO% = 13.4, an ethyl acetate solution having a solid content concentration of 75%) and 15.0 g of methyl isobutyl ketone were added and stirred. Subsequently, 5.6 g (0.064 mol) of methyl ethyl ketone oxime was slowly added using a dropping funnel, and the mixture was reacted at 55°C until the NCO content ratio reached 0%. After cooling, 1.4 g of ethylene oxide 30 mol adduct of tristyrenated phenol was added to obtain a uniform mixture. After 80 g of ion-exchanged water was charged, the resultant product was water-dispersed by a high-pressure homogenizer (400 bar). Thereafter, the organic solvent was distilled off under reduced pressure, and ion-exchanged water was added to obtain an aqueous dispersion of the isocyanate compound having a solid content concentration of 21.4% (Table 3).

**[Table 3]**

| | Type | Production Example D-1 | Production Example D-2 |
|---|---|---|---|
| Polyol compound Component (A1) | Ether group | | |
| | Carbonate group | | |
| | Ester group | | |
| Polyol compound Component (A2) | Diol | | |
| | Triol | | ○ |
| Polyisocyanate compound Component (B) | HDI-based | ○ | |
| | TDI-based | | ○ |
| Blocking agent | 3,5-DMP | ○ | |
| | MEK oxime | | ○ |
| Self-emulsifiability imparting compound | MPEG-2000 | | |
| Solid content concentration [%] | | 20.0 | 21.4 |
| Effective content concentration [%] | | 20.0 | 20.0 |
| Reactive functional group | | BI | BI |
| Content of reactive functional group in aqueous dispersion [mmol/g] | | 0.73 | 0.62 |
| Molar ratio (B/A1) (NCO in component (B)/OH in component (A1)) | | | |
| Molar ratio (B/A2) (NCO in component (B)/OH in component (A1)) | | | 2.0 |
| Molar ratio (B/(A1 + A2)) (NCO in component (B)/total OH in components (A1) and (A2)) | | | |
| Mass ratio (component (B)/component (A1)) | | | |
| Mass ratio (component (B)/component (A2)) | | | 3.9 |
| Mass ratio (component (B)/components (A1 + A2)) | | | |

In Table 3, "HDI" means hexamethylene diisocyanate, "TDI" means tolylene diisocyanate, "DMP" means dimethylpyrazole, "MEK" means methyl ethyl ketone, "MPEG" means polyoxyethylene monomethyl ether, and "BI" means a blocked isocyanate group. In Table 3, in the notation "NCO in component (B)", NCO is a blocked isocyanate group (BI).

### <Example 1>

3.8 g of the aqueous dispersion of Production Example AB-1 (effective content concentration: 20.0%) and 3.8 g of the aqueous dispersion of Production Example C-1 (effective content concentration: 20.0%) were mixed to prepare a water repellent composition (stock solution). Thereafter, water was added so that the total amount was 100 g to prepare a water repellent composition (processing solution). As shown in Table 5, the water repellent composition (processing solution) contains 0.76 mass% of the component (AB) and 0.76 mass% of the component (C). Subsequently, a test fabric was caused to pass through the water repellent composition (processing solution) by a continuous method, and an unnecessary solution was squeezed with a constant pressure mangle, dried at 110°C for 90 seconds, and cured at 170°C for 60 seconds. As the test fabric, polyester taffeta (weight per unit: 65 g/m², hereinafter, referred to as PET taffeta) and nylon high density taffeta (weight per unit: 60 g/m², hereinafter, referred to as Ny high density taffeta) were used, and in each pickup, the polyester taffeta was 31%, and the nylon high density taffeta was 48%.

### <Examples 2 to 38 and 41 to 45 and Comparative Examples 1 to 9>

The same operation as in Example 1 was performed to prepare water repellent compositions so that the content ratio of each component in the water repellent composition (processing solution) was as shown in Tables 5 to 11 below.

### <Examples 39 and 40>

The same operation as in Example 1 was performed, except that the heat treatment conditions of Example 1 were changed to drying at 110°C for 90 seconds and curing at 170°C for 300 seconds, and water repellent compositions were prepared so that the content ratio of each component in the water repellent composition (processing solution) was as shown in Table 11 below.

### [Test Evaluation Method]

### (Water Repellency Evaluation)

The obtained processed fabric was evaluated in accordance with 7.2 Water repellency test (spray test) of JIS L 1092:2009. The evaluation was performed according to the following criteria, and a case where the performance is slightly good was rated as "+", and a case where the performance is slightly poor was rated as "-".
5: No wetting or water droplet adhesion on the surface.
4: No wetting on the surface but showing adhesion of small water droplets.
3: Showing wetting like small individual water droplets on the surface.
2: Showing wetting on the half of the surface and a state where small individual wetting penetrates the fabric.
1: Showing wetting on the entire surface.

### (Evaluation of Washing Durability of Water Repellency)

The obtained processed fabric was washed 10 times (HL-10) in accordance with Method 103 in Appendix Table 1 in JIS L 0217 (1995), and the obtained washed fabric was subjected to the above water repellency test. The water repellency test was performed after air drying (N) or tumbler drying (66 ± 5°C: 40 minutes, T).

### (Evaluation of Chalk Mark Resistance)

Using the processed Ny high density taffeta, evaluation was performed according to <Method A> and <Method B> described below, respectively.

### <Method A>

The surface of the processed fabric was rubbed with a metal comb, whether the trace remained on the fabric was visually observed, and evaluation was performed in five stages as follows.
5: There is no trace.
4: Almost no trace is observed.
3: Slight traces are observed.
2: Traces are observed.
1: Clear traces are observed.

### <Method B>

With reference to the procedure of 9.2 Friction tester type II (Gakushin-type) method (in the case of a dry test) of JIS L 0849:2013, a white cotton fabric for friction was attached to a friction block (500 g), and the processed fabric surface was reciprocated and rubbed 50 times. The color change (ΔE*) before and after friction was measured using a spectral colorimeter (manufactured by Nippon Denshoku Industries Co., Ltd.; SE-2000, lens: 6 mm, C light source, two-degree field of view). Five points were measured, and the average value thereof was described in each table. The smaller the numerical value, the smaller the color change. For the description of Table 4, the description of Japanese Patent Laid-open Publication No. 2009-177415 was referred to.

**[Table 4]**

| ΔE* | Evaluation |
|---|---|
| 0.2 or less | Unmeasurable region |
| 0.3 | Measured color reproduction accuracy for identical object |
| 0.6 | Practical level of tolerance when accounting for various sources of error |
| 1.2 | Color difference can be easily distinguished by most people when two colors are placed side by side. |
| 2.5 | Two colors can be perceived as nearly the same when viewed separately. |

### (Evaluation of Seam Slipping Resistance)

Using the processed PET taffeta, a test was performed on warp thread slippage under a load of 117.7 N in accordance with 8.23.1 Seam slippage method Method B of JIS L 1096:2010, and seam slippage (mm) was measured. The seam slippage of the untreated fabric was 0.8 mm.

### (Peeling Strength Test)

The processed Ny high density taffeta was calendered at 160°C and a nip pressure of 100 kg/cm. The calendered surface was coated with a coating resin composition having the following composition using a knife coater, dried at 150°C for 2 minutes, and then aged at 80°C for 10 hours. MELCO tape BW-II (hot-melt adhesive tape, manufactured by SAN CHEMICALS, LTD., width: 25 mm, color RB) was thermocompression-bonded (150°C, 10 seconds, 1.0 kgf/cm²) to the coated surface in the warp direction, and the peeling strength [N/25 mm width] was measured with an autograph (manufactured by SHIMADZU CORPORATION; AG-5kNX) in accordance with JIS L 1086:2013 7.10.1. The peeling strength was an average value of three test pieces.

### [Coating Resin Composition]

· PASCOL NJ-1 (aqueous dispersion of urethane resin, manufactured by Meisei Chemical Works, Ltd.) 100 parts by mass
· SU-268A (blocked isocyanate-based crosslinking agent, manufactured by Meisei Chemical Works, Ltd.) 5 parts by mass
· Thickener in an appropriate amount (prepared to have a viscosity of 10000 mPa·s (B-type viscometer; Rotor No. 4, 30 rpm)))

Tables 5 to 11 below show the composition of the water repellent compositions of Examples and Comparative Examples, and the results of the water repellency, the chalk mark resistance, the seam slipping resistance, and the peeling strength test. In Tables 5 to 11, the notation "%" of the reaction product (AB), the isocyanate-based crosslinking agent (D1), and the water repellency-imparting compound (C) means the content ratio (mass%) of each component in the water repellent composition (processing solution).

**[Table 5]**

| Water repellent composition | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|---|
| Reaction product (AB) | | Production Example AB-1 | 0.76% | | | | | | | | | | | | |
| | | Production Example AB-2 | | 0.76% | | | | | | | | | | | |
| | | Production Example AB-3 | | | 0.76% | | | | | | | | | | |
| | | Production Example AB-4 | | | | 0.76% | | | | | | | | | |
| | | Production Example AB-5 | | | | | 0.76% | | | | | | | | |
| | | Production Example AB-6 | | | | | | 0.76% | | | | | | | |
| | | Production Example AB-7 | | | | | | | 0.76% | | | | | | |
| | | Production Example AB-8 | | | | | | | | 0.76% | | | | | |
| | | Production Example AB-9 | | | | | | | | | 0.76% | | | | |
| | | Production Example AB-10 | | | | | | | | | | 0.76% | | | |
| Isocyanate-based crosslinking agent (D1) | | Production Example D-2 | | | | | | | | | | | | 0.76% | |
| Water repellency-imparting compound (C) | | Production Example C-1 | 0.76% | 0.76% | 0.76% | 0.76% | 0.76% | 0.76% | 0.76% | 0.76% | 0.76% | 0.76% | 0.76% | 0.76% | 0.76% |
| | | Production Example C-4 | | | | | | | | | | | | | 0.08% |
| Mass ratio (component (AB)/component (C)) | | | 1.00 | 1.00 | 1.00 | 1.00 | 1.00 | 1.00 | 1.00 | 1.00 | 1.00 | 1.00 | | | |
| Mass ratio (component (D1)/component (C)) | | | | | | | | | | | | | | 1.00 | |
| Water repellency | HL-0 | PET | 4+ | 4+ | 4+ | 4+ | 4+ | 4 | 4 | 4+ | 4 | 4 | 4+ | 4 | 4+ |
| | | Ny | 4+ | 4+ | 4+ | 4+ | 4+ | 4 | 4 | 4+ | 4 | 4 | 4+ | 4 | 4+ |
| | HL-10N | PET | 2 | 2- | 2+ | 2 | 2+ | 2 | 2 | 2 | 2- | 2 | 2 | | 3- |
| | | Ny | 3 | 3 | 3 | 3 | 4- | 3 | 3 | 3- | 3 | 3+ | 3- | | 3 |
| | HL-10T | PET | 4 | 4 | 4 | 4 | 4 | 4- | 4 | 4+ | 4 | 4 | 4 | | 3+ |
| | | Ny | 4 | 4 | 4+ | 4 | 4 | 4- | 4 | 4 | 4- | 3+ | 4 | | 4 |
| Chalk mark resistance | | Method A | 4 | 4 | 4 | 4 | 4 | 4 | 4 | 4 | 4 | 4 | 1 | 1 | 1 |
| | | Method B | 0.22 | 0.13 | 0.17 | 0.29 | 0.16 | 0.33 | 0.50 | 0.30 | 0.43 | 0.41 | 1.12 | 0.98 | 1.17 |
| Seam slipping resistance [mm] | | | | | | | 5.1 | 5.7 | 5.0 | 5.0 | | | 5.1 | | 7.6 |
| Peeling strength [N/25 mm width] | | | | | | | 31.0 | 40.8 | 21.1 | 26.1 | | | 11.5 | | 11.2 |

As compared with Comparative Examples 1 and 3, in Examples 1 to 10, improvement in chalk mark resistance was observed. **In** Examples 5 to 8, no adverse effect on the seam slipping resistance and the peeling strength was observed. **In** Comparative Example 2, the molar ratio (B/A2) of the reactive functional groups (the hydroxyl group and the isocyanate group) was 2, and improvement in chalk mark resistance was not observed, whereas in Example 3, the molar ratio (B/A2) of the reactive functional groups (the hydroxyl group and the isocyanate group) was 3, and improvement in chalk mark resistance was observed.

**[Table 6]**

| Water repellent composition | | | Example 11 | Example 12 | Example 13 | Example 14 | Example 15 | Example 16 |
|---|---|---|---|---|---|---|---|---|
| Reaction product (AB) | | Production Example AB-5 | 0.76% | 0.76% | 0.76% | 0.76% | 0.76% | 0.76% |
| Isocyanate-based crosslinking agent (D1) | | Production Example D-1 | 0.20% | 0.40% | 0.80% | 1.60% | 2.60% | 5.20% |
| Water repellency-imparting compound (C) | | Production Example C-1 | 0.76% | 0.76% | 0.76% | 0.76% | 0.76% | 0.76% |
| Mass ratio (component (AB)/component (C)) | | | 1.00 | 1.00 | 1.00 | 1.00 | 1.00 | 1.00 |
| Mass ratio (components (AB + D1)/component (C)) | | | 1.26 | 1.53 | 2.05 | 3.11 | 4.42 | 7.84 |
| Mass ratio (component (D1)/component (AB)) | | | 0.26 | 0.53 | 1.05 | 2.11 | 3.42 | 6.84 |
| Water repellency | HL-0 | PET | 4+ | 4+ | 4+ | 4+ | 4+ | 4 |
| | | Ny | 4+ | 4+ | 4+ | 4+ | 4+ | 4+ |
| | HL-10N | PET | 2+ | 3- | 3- | 3 | 3+ | 4- |
| | | Ny | 3+ | 3+ | 4 | 4 | 4 | 4 |
| | HL-10T | PET | 4 | 4 | 4 | 4 | 4 | 4 |
| | | Ny | 4- | 4 | 4+ | 4 | 4 | 4+ |
| Chalk mark resistance | | Method A | 4 | 4 | 4 | 4 | 4 | 4 |
| | | Method B | 0.40 | 0.17 | 0.11 | 0.25 | 0.14 | 0.09 |
| Seam slipping resistance [mm] | | | 5.3 | | | | | |
| Peeling strength [N/25 mm width] | | | 38.0 | | | | | |

In Examples 11 to 16, addition of the crosslinking agent (the isocyanate-based crosslinking agent (D1)) was performed under the conditions of Example 5, but no adverse effect on the chalk mark resistance was observed.

**[Table 7]**

| Water repellent composition | | | Example 17 | Example 18 | Example 19 | Example 20 | Comparative Example 4 | Comparative Example 5 | Comparative Example 6 | Comparative Example 7 |
|---|---|---|---|---|---|---|---|---|---|---|
| Reaction product (AB) | | Production Example AB-5 | 0.76% | 0.76% | 0.76% | 0.76% | | | | |
| Isocyanate-based crosslinking agent (D1) | | Production Example D-1 | 0.20% | | | | | | | |
| Water repellency-imparting compound (C) | | Production Example C-1 | | | 0.60% | | | | 1.20% | |
| | | Production Example C-2 | 0.76% | | | | 0.76% | | | |
| | | Production Example C-3 | | 0.76% | | | | 1.50% | | |
| | | Production Example C-5 | | | 0.16% | | | | 0.32% | |
| | | AG-E082 | | | | ca. 0.76% | | | | 1.50% |
| Mass ratio (component (AB)/component (C)) | | | 1.00 | 1.00 | 1.00 | ca. 1 | | | | |
| Mass ratio (components (AB + D1)/component (C)) | | | 1.26 | | | | | | | |
| Mass ratio (component (D1)/component (AB)) | | | 0.26 | | | | | | | |
| Water repellency | HL-0 | PET | 4+ | 4+ | 4+ | 5 | 4- | 4+ | 4+ | 5 |
| | | Ny | 4+ | 4+ | 4+ | 5 | 4- | 4+ | 4+ | 5 |
| | HL-10N | PET | 2 | 2 | 2 | 3+ | 1 | 2 | 2+ | 3+ |
| | | Ny | 3+ | 3- | 3 | 2- | 1 | 1 | 1+ | 1 |
| | HL-10T | PET | 4 | 4 | 4+ | 4+ | 3 | 4+ | 4- | 4+ |
| | | Ny | 3+ | 4 | 4+ | 4 | 3 | 3+ | 4- | 3- |
| Chalk mark resistance | | Method A | 4 | 4 | 4 | 4 | 2 | 2 | 2 | 1 |
| | | Method B | 0.09 | 0.19 | 0.19 | 0.37 | 0.91 | 0.91 | 0.98 | 1.25 |
| Seam slipping resistance [mm] | | | | 4.2 | 5.1 | 0.6 | | 5.0 | 5.6 | 0.6 |
| Peeling strength [N/25 mm width] | | | | 10.4 | 9.2 | 23.4 | | 8.6 | 8.6 | 9.4 |

When Example 17 and Comparative Example 4, Example 18 and Comparative Example 5, Example 19 and Comparative Example 6, Example 20 and Comparative Example 7 were compared with each other, improvement in chalk mark resistance was observed under all conditions. In Example 20, examination was conducted using a C6 fluorine-based water repellent containing a fluorine compound having a perfluoroalkyl group having 1 to 6 carbon atoms (AsahiGuard E-SERIES AG-E082, solid content concentration: 20%, effective content concentration: about 20%, manufactured by AGC Inc., hereinafter, referred to as AG-E082) as the water repellency-imparting compound (C; a compound having a structure derived from C1a).

**[Table 8]**

| Water repellent composition | | | Example 21 | Example 22 | Example 23 | Example 24 |
|---|---|---|---|---|---|---|
| Reaction product (AB) | | Production Example AB-5 | 0.98% | 0.46% | 0.32% | 0.16% |
| Water repellency-imparting compound (C) | | Production Example C-1 | 0.54% | 1.06% | 1.20% | 1.36% |
| Mass ratio (component (AB)/component (C)) | | | 1.81 | 0.43 | 0.27 | 0.12 |
| Water repellency | HL-0 | PET | 4 | 4 | 4 | 4 |
| | | Ny | 4 | 4 | 4 | 4 |
| | HL-10N | PET | 2- | 2+ | 2+ | 2+ |
| | | Ny | 3 | 2+ | 3 | 2+ |
| | HL-10T | PET | 4- | 4- | 4 | 4 |
| | | Ny | 4 | 4 | 4 | 4 |
| Chalk mark resistance | | Method A | 4 | 3 | 2 | 2 |
| | | Method B | 0.15 | 0.48 | 0.63 | 0.76 |
| Seam slipping resistance [mm] | | | | | | |
| Peeling strength [N/25 mm width] | | | | | | |

In Examples 21 to 24, the water repellency and the chalk mark resistance before and after the blending ratio of Example 5 were evaluated. When the mass ratio component (AB)/component (C) was 0.12 or more, improvement in chalk mark resistance was observed, when the mass ratio was 0.43 or more, the chalk mark resistance was more excellent, and when the mass ratio was 1 or more, the chalk mark resistance was most excellent.

**[Table 9]**

| Water repellent composition | | | Comparative Example 8 | Example 25 | Example 26 | Example 27 | Example 28 | Example 29 | Example 30 |
|---|---|---|---|---|---|---|---|---|---|
| Reaction product (AB) | | Production Example AB-5 | | 0.08% | 0.26% | 0.50% | 0.76% | 2.26% | 5.00% |
| Isocyanate-based crosslinking agent (D1) | | Production Example D-1 | 0.16% | 0.16% | 0.16% | 0.16% | 0.16% | 0.16% | 0.16% |
| Water repellency-imparting compound (C) | | Production Example C-6 | 0.48% | 0.48% | 0.48% | 0.48% | 0.48% | 0.48% | 0.48% |
| | | Production Example C-7 | 0.16% | 0.16% | 0.16% | 0.16% | 0.16% | 0.16% | 0.16% |
| Mass ratio (component (AB)/component (C)) | | | | 0.13 | 0.41 | 0.78 | 1.19 | 3.53 | 7.81 |
| Mass ratio (components (AB + D1)/component (C)) | | | | 0.38 | 0.66 | 1.03 | 1.44 | 3.78 0.07 | 8.06 |
| Mass ratio (component (D1)/component (AB)) | | | | 2.00 | 0.62 | 0.32 | 0.21 | | 0.03 |
| Water repellency | HL-0 | PET | 4 | 4 | 4 | 4 | 4 | 4 | 4 |
| | | Ny | 4 | 4+ | 4+ | 4+ | 4+ | 4+ | 4+ |
| | HL-10N | PET | 3 | 3 | 3- | 3 | 3 | 3 | 3- |
| | | Ny | 2 | 2+ | 2+ | 2+ | 3+ | 3+ | 3+ |
| | HL-10T | PET | 4- | **4-** | 4- | 4- | 4 | 3+ | 3+ |
| | | Ny | 4 | 4- | 4 | 3+ | 4 | 4- | 4 |
| Chalk mark resistance | | Method A | 2 | 3 | 4 | 4 | 4 | 4 | 4 |
| | | Method B | 0.84 | 0.58 | 0.46 | 0.40 | 0.16 | 0.10 | 0.13 |
| Seam slipping resistance [mm] | | | 5.9 | | | | 5.4 | | |
| Peeling strength [N/25 mm width] | | | 2.9 | | | | 13.8 | | |

As compared with Comparative Example 8, in Examples 25 to 30, improvement in chalk mark resistance was observed. When the mass ratio component (AB)/component (C) was 0.13 or more, improvement in chalk mark resistance was observed, and when the mass ratio was 0.41 or more, the chalk mark resistance was most excellent. When Comparative Example 8 and Example 28 were compared, the adverse effect on the seam slipping resistance was hardly observed, and the peeling strength was improved.

**[Table 10]**

| Water repellent composition | | | Comparative Example 9 | Example 31 | Example 32 | Example 33 | Example 34 | Example 35 | Example 36 | Example 37 |
|---|---|---|---|---|---|---|---|---|---|---|
| Reaction product (AB) | | Production Example AB-5 | | 0.24% | 0.50% | 0.74% | 1.00% | 2.26% | 5.00% | 0.74% |
| Isocyanate-based crosslinking agent (D1) | | Production Example D-1 | | | | | | | | 0.20% |
| Water repellency-imparting compound (C) | | Production Example C-5 | 0.30% | 0.26% | 0.20% | 0.16% | 0.10% | 0.16% | 0.16% | 0.16% |
| | | Production Example C-8 | 1.20% | 1.00% | 0.80% | 0.60% | 0.40% | 0.60% | 0.60% | 0.60% |
| Mass ratio (component (AB)/component (C)) | | | | 0.19 | 0.50 | 0.97 | 2.00 | 2.97 | 6.58 | 0.97 |
| Mass ratio (components (AB + D1)/component (C)) | | | | | | | | | | 1.24 |
| Mass ratio (component (D1)/component (AB)) | | | | | | | | | | 0.27 |
| Water repellency | HL-0 | PET | 4 | 5- | 4+ | 4 | 4+ | 4+ | 5- | 4+ |
| | | Ny | 4+ | 5- | 4+ | 4+ | 4+ | 4+ | 4+ | 4+ |
| | HL-10N | PET | 3 | 3+ | 2+ | 2+ | 3- | 3- | 3- | 3- |
| | | Ny | 1 | 3 | 3+ | 3- | 3 | 2 | 3+ | 3+ |
| | HL-10T | PET | 4 | 4 | 4 | 4 | 4- | 4 | 4+ | 4+ |
| | | Ny | 4- | 4 | 4 | 4 | 4- | 4 | 4 | 4 |
| Chalk mark resistance | | Method A | 1 | 2 | 4 | 4 | 4 | 4 | 4 | 4 |
| | | Method B | 1.01 | 0.78 | 0.47 | 0.28 | 0.11 | 0.12 | 0.14 | 0.21 |
| Seam slipping resistance [mm] | | | 3.2 | | | 5.1 | | | | 4.7 |
| Peeling strength [N/25 mm width] | | | 5.4 | | | 8.2 | | | | 10.4 |

As compared with Comparative Example 9, in Examples 31 to 37, improvement in chalk mark resistance was observed. When the mass ratio (component (AB)/component (C)) was 0.19 or more, improvement in chalk mark resistance was observed, and when the mass ratio was 0.50 or more, the chalk mark resistance was most excellent. When Comparative Example 9 and Examples 33 and 37 were compared, the seam slipping resistance was slightly deteriorated, but the peeling strength was improved.

**[Table 11]**

| Water repellent composition | | | Example 38 | Example 39 | Example 40 | Example 41 | Example 42 | Example 43 | Example 44 | Example 45 |
|---|---|---|---|---|---|---|---|---|---|---|
| Reaction product (AB) | | Production Example AB-11 | 0.76% | | | | | | | |
| | | Production Example AB-12 | | 0.76% | | | | | | |
| | | Production Example AB-13 | | | 0.76% | | | | | |
| | | Production Example AB-14 | | | | 0.76% | | | | |
| | | Production Example AB-15 | | | | | 0.76% | | | |
| | | Production Example AB-16 | | | | | | 0.76% | | |
| | | Production Example AB-17 | | | | | | | 0.76% | |
| | | Production Example AB-18 | | | | | | | | 0.76% |
| Water repellency-imparting compound (C) | | Production Example C-1 | 0.76% | 0.76% | 0.76% | 0.76% | 0.76% | 0.76% | 0.76% | 0.76% |
| Mass ratio (component (AB)/component (C)) | | | 1.00 | 1.00 | 1.00 | 1.00 | 1.00 | 1.00 | 1.00 | 1.00 |
| Water repellency | HL-0 | PET | 4 | 4 | 4 | 4 | 4 | 4+ | 4 | 4 |
| | | Ny | 4 | 4 | 4 | 4+ | 4 | 4+ | 4 | 4 |
| | HL-10N | PET | 2 | 3 | 3- | 2 | 3- | 2- | 2 | 2 |
| | | Ny | 3 | 3 | 4- | 3+ | 3 | 3+ | 3 | 3- |
| | HL-10T | PET | 4 | 4 | 4- | 4 | 4 | 4 | 4- | 4 |
| | | Ny | 3+ | 3+ | 4- | 4 | 4 | 4 | 4 | 4 |
| Chalk mark resistance | | Method A | 3 | 4 | 4 | 4 | 4 | 4 | 4 | 3 |
| | | Method B | 0.58 | 0.26 | 0.26 | 0.24 | 0.24 | 0.18 | 0.34 | 0.64 |

In Examples 38 to 41, examination was conducted on the reaction product (AB) in which the types of the polyisocyanate compound and the blocking agent were changed. In Example 42, examination was conducted on the reaction product (AB) having no self-emulsifiability (dispersibility). In Examples 43 to 45, examination was conducted on the reaction product (AB) which also has a hydroxyl group in addition to a blocked isocyanate group as a reactive functional group. As compared with Comparative Examples 1 and 3, in Examples 38 to 45, improvement in chalk mark resistance was observed.

## Claims

1. A water repellent composition comprising:
at least a reaction product (AB) of a polyol compound (A) and a polyisocyanate compound (B); and
a water repellency-imparting compound (C),
wherein
the polyol compound (A) is at least one of a polyol compound (A1) having one or more of at least one functional group selected from the group consisting of an ether group, a carbonate group, and an ester group and a polyol compound (A2) having none of the functional groups,
the reaction product (AB) has an isocyanate group,
when the polyol compound (A) includes only the polyol compound (A2) in the reaction product (AB), a molar ratio (B/A2) of an isocyanate group in the polyisocyanate compound (B) to a hydroxyl group in the polyol compound (A2) is 2.1 or more,
the water repellency-imparting compound (C) has no perfluoroalkyl group having 7 or more carbon atoms, and
a mass ratio (AB/C) of the reaction product (AB) to the water repellency-imparting compound (C) is 0.05 or more.

2. The water repellent composition according to claim 1, wherein the polyol compound (A1) is a polymer polyol compound and has at least one group selected from the group consisting of an ether group, a carbonate group, and an ester group as a linking group forming a main chain.

3. The water repellent composition according to claim 1 or 2, wherein when the polyol compound (A) includes only the polyol compound (A1) in the reaction product (AB), a molar ratio B/A1 of the number of moles of the isocyanate group in the polyisocyanate compound (B) to the number of moles of a hydroxyl group in the polyol compound (A1) is in a range of 1 to 25.

4. The water repellent composition according to claim 1 or 2, wherein a molar ratio B/(A1 + A2) of the number of moles of the isocyanate group in the polyisocyanate compound (B) to a total number of moles of the hydroxyl groups in the polyol compound (A1) and the polyol compound (A2) in the reaction product (AB) is in a range of 1 to 25.

5. The water repellent composition according to any one of claims 1 to 4, wherein the isocyanate group in a structure of the reaction product (AB) is a blocked isocyanate group.

6. The water repellent composition according to claim 5, wherein the reaction product (AB) has a hydroxyl group in the structure thereof.

7. The water repellent composition according to any one of claims 1 to 6, wherein the reaction product (AB) has at least one group selected from the group consisting of a nonionic hydrophilic group, a cationic hydrophilic group, and an anionic hydrophilic group.

8. The water repellent composition according to any one of claims 1 to 7, comprising a crosslinking agent (D).

9. The water repellent composition according to any one of claims 1 to 8, wherein the water repellency-imparting compound (C) includes at least one selected from the group consisting of a fluorine compound having a perfluoroalkyl group having 1 to 6 carbon atoms, a non-fluorine compound having a hydrocarbon group having 7 to 40 carbon atoms, and a silicone-based compound having at least an alkyl group having 3 to 50 carbon atoms.

10. The water repellent composition according to any one of claims 1 to 9, further comprising a surfactant.

11. A water repellent fiber product obtained by treating a fiber product with the water repellent composition according to any one of claims 1 to 10.

12. A method for manufacturing a water repellent fiber product, comprising a step of bringing the water repellent composition according to any one of claims 1 to 10 into contact with a fiber product.

13. A kit for preparing a water repellent composition by mixing a first agent and a second agent at the time of use, the kit comprising:
the first agent containing at least a reaction product (AB) of a polyol compound (A) and a polyisocyanate compound (B); and
the second agent, containing at least a water repellency-imparting compound (C),
wherein
the polyol compound (A) is at least one of a polyol compound (A1) having one or more of at least one functional group selected from the group consisting of an ether group, a carbonate group, and an ester group and a polyol compound (A2) having none of the functional groups,
the reaction product (AB) has an isocyanate group,
when the polyol compound (A) includes only the polyol compound (A2) in the reaction product (AB), a molar ratio (B/A2) of an isocyanate group in the polyisocyanate compound (B) to a hydroxyl group in the polyol compound (A2) is 2.1 or more,
the water repellency-imparting compound (C) has no perfluoroalkyl group having 7 or more carbon atoms, and
a mass ratio (AB/C) of the reaction product (AB) to the water repellency-imparting compound (C) is 0.05 or more.

14. The kit according to claim 13, wherein the isocyanate group in a structure of the reaction product (AB) is a blocked isocyanate group.

15. The kit according to claim 14, wherein the reaction product (AB) has a hydroxyl group in the structure thereof.

## Patentansprüche

1. Wasserabweisende Zusammensetzung, die Folgendes umfasst:
zumindest ein Reaktionsprodukt (AB) einer Polyol-Verbindung (A) und einer Polyisocyanat-Verbindung (B) und
eine Wasserabweisung verleihende Verbindung (C);
wobei
die Polyol-Verbindung (A) zumindest eine aus einer Polyol-Verbindung (A1) mit einer oder mehreren von zumindest einer funktionellen Gruppe, die aus der aus einer Ethergruppe, einer Carbonatgruppe und einer Estergruppe bestehenden Gruppe ausgewählt ist, und einer Polyol-Verbindung (A2) mit keiner der funktionellen Gruppen ist,
das Reaktionsprodukt (AB) eine Isocyanatgruppe aufweist,
wenn die Polyol-Verbindung (A) nur die Polyol-Verbindung (A2) im Reaktionsprodukt (AB) umfasst, das Molverhältnis (B/A2) zwischen Isocyanatgruppen in der Polyisocyanat-Verbindung (B) und Hydroxylgruppen in der Polyol-Verbindung (A2) 2:1 oder mehr beträgt,
die Wasserabweisung verleihende Verbindung (C) keine Perfluoralkylgruppe mit 7 oder mehr Kohlenstoffatomen aufweist und
das Massenverhältnis (AB/C) zwischen dem Reaktionsprodukt (AB) und der Wasserabweisung verleihenden Verbindung (C) 0,05 oder mehr beträgt.

2. Wasserabweisende Zusammensetzung nach Anspruch 1, wobei die Polyol-Verbindung (A1) eine polymere Polyol-Verbindung ist und zumindest eine Gruppe, ausgewählt aus der aus einer Ethergruppe, einer Carbonatgruppe und einer Estergruppe bestehenden Gruppe als Linkergruppe aufweist, welche die Hauptkette bildet.

3. Wasserabweisende Zusammensetzung nach Anspruch 1 oder 2, wobei, wenn die Polyol-Verbindung (A) nur die Polyol-Verbindung (A1) im Reaktionsprodukt (AB) enthält, das Molverhältnis B/A1 zwischen der Molanzahl der Isocyanatgruppen in der Polyisocyanat-Verbindung (B) und der Molanzahl der Hydroxylgruppen in der Polyol-Verbindung (A1) im Bereich von 1 bis 25 liegt.

4. Wasserabweisende Zusammensetzung nach Anspruch 1 oder 2, wobei das Molverhältnis B/(A1+A2) zwischen der Molanzahl der Isocyanatgruppen in der Polyisocyanat-Verbindung (B) einerseits und der Gesamt-Molanzahl der Hydroxylgruppen in der Polyol-Verbindung (A1) und der Polyol-Verbindung (A2) im Reaktionsprodukt (AB) andererseits im Bereich von 1 bis 25 liegt.

5. Wasserabweisende Zusammensetzung nach einem der Ansprüche 1 bis 4, wobei die Isocyanatgruppe in der Struktur des Reaktionsprodukts (AB) eine blockierte Isocyanatgruppe ist.

6. Wasserabweisende Zusammensetzung nach Anspruch 5, wobei das Reaktionsprodukt (AB) eine Hydroxylgruppe in seiner Struktur aufweist.

7. Wasserabweisende Zusammensetzung nach einem der Ansprüche 1 bis 6, wobei das Reaktionsprodukt (AB) zumindest eine Gruppe aufweist, die aus der aus einer nichtionischen hydrophilen Gruppe, einer kationischen hydrophilen Gruppe und einer anionischen hydrophilen Gruppe bestehenden Gruppe ausgewählt ist.

8. Wasserabweisende Zusammensetzung nach einem der Ansprüche 1 bis 7, die ein Vernetzungsmittel (D) umfasst.

9. Wasserabweisende Zusammensetzung nach einem der Ansprüche 1 bis 8, wobei die Wasserabweisung verleihende Verbindung (C) zumindest eine Verbindung, ausgewählt aus der aus einer Fluorverbindung mit einer Perfluoralkylgruppe mit 1 bis 6 Kohlenstoffatomen, einer Nicht-Fluorverbindung mit einer Kohlenwasserstoffgruppe mit 7 bis 40 Kohlenstoffatomen und einer Verbindung auf Silikonbasis mit zumindest einer Alkylgruppe mit 3 bis 50 Kohlenstoffatomen bestehenden Gruppe umfasst.

10. Wasserabweisende Zusammensetzung nach einem der Ansprüche 1 bis 9, die weiters ein Tensid umfasst.

11. Wasserabweisendes Faserprodukt, das durch Behandeln eines Faserprodukts mit einer wasserabweisenden Zusammensetzung nach einem der Ansprüche 1 bis 10 erhältlich ist.

12. Verfahren zur Herstellung eines wasserabweisenden Faserprodukts, das einen Schritt des In-Kontakt-Bringens einer wasserabweisenden Zusammensetzung nach einem der Ansprüche 1 bis 10 mit einem Faserprodukt umfasst.

13. Set zur Herstellung einer wasserabweisenden Zusammensetzung durch Vermischen eines ersten Mittels und eines zweiten Mittels zum Zeitpunkt der Verwendung, wobei das Set Folgendes umfasst:
das erste Mittel, das zumindest ein Reaktionsprodukt (AB) aus einer Polyol-Verbindung (A) und einer Polyisocyanat-Verbindung (B) umfasst, und
das zweite Mittel, das zumindest eine Wasserabweisung verleihende Verbindung (C) umfasst;
wobei
die Polyol-Verbindung (A) zumindest eine aus einer Polyol-Verbindung (A1) mit einer oder mehreren von zumindest einer funktionellen Gruppe, die aus der aus einer Ethergruppe, einer Carbonatgruppe und einer Estergruppe bestehenden Gruppe ausgewählt ist, und einer Polyol-Verbindung (A2) mit keiner der funktionellen Gruppen ist,
das Reaktionsprodukt (AB) eine Isocyanatgruppe aufweist,
wenn die Polyol-Verbindung (A) nur die Polyol-Verbindung (A2) im Reaktionsprodukt (AB) umfasst, das Molverhältnis (B/A2) zwischen Isocyanatgruppen in der Polyisocyanat-Verbindung (B) und Hydroxylgruppen in der Polyol-Verbindung (A2) 2:1 oder mehr beträgt,
die Wasserabweisung verleihende Verbindung (C) keine Perfluoralkylgruppe mit 7 oder mehr Kohlenstoffatomen aufweist und
das Massenverhältnis (AB/C) zwischen dem Reaktionsprodukt (AB) und der Wasserabweisung verleihenden Verbindung (C) 0,05 oder mehr beträgt.

14. Set nach Anspruch 13, wobei die Isocyanatgruppe in der Struktur des Reaktionsprodukts (AB) eine blockierte Isocyanatgruppe ist.

15. Set nach Anspruch 14, wobei das Reaktionsprodukt (AB) eine Hydroxylgruppe in seiner Struktur aufweist.

## Revendications

1. Composition hydrofuge, comprenant :
au moins un produit de réaction (AB) d'un composé de polyol (A) et d'un composé de polyisocyanate (B) ; et
un composé conférant un caractère hydrofuge (C),
dans laquelle
le composé de polyol (A) est au moins un d'un composé de polyol (A1) présentant un ou plusieurs d'au moins un groupe fonctionnel choisi dans le groupe constitué d'un groupe éther, d'un groupe carbonate et d'un groupe ester, et d'un composé de polyol (A2) ne présentant aucun des groupes fonctionnels,
le produit de réaction (AB) présente un groupe isocyanate,
lorsque le composé de polyol (A) inclut uniquement le composé de polyol (A2) dans le produit de réaction (AB), un rapport molaire (B/A2) d'un groupe isocyanate dans le composé de polyisocyanate (B) à un groupe hydroxyle dans le composé de polyol (A2) est de 2,1 ou plus,
le composé hydrofuge (C) ne présente pas de groupe perfluoroalkyle présentant 7 atomes de carbone ou plus, et
un rapport massique (AB/C) du produit de réaction (AB) au composé conférant un caractère hydrofuge (C) est de 0,05 ou plus.

2. Composition hydrofuge selon la revendication 1, dans laquelle le composé de polyol (A1) est un composé de polyol polymère et présente au moins un groupe choisi dans le groupe constitué d'un groupe éther, d'un groupe carbonate et d'un groupe ester en tant que groupe de liaison formant une chaîne principale.

3. Composition hydrofuge selon la revendication 1 ou 2, dans laquelle lorsque le composé de polyol (A) inclut uniquement le composé de polyol (A1) dans le produit de réaction (AB), un rapport molaire B/A1 du nombre de moles du groupe isocyanate dans le composé de polyisocyanate (B) au nombre de moles d'un groupe hydroxyle dans le composé de polyol (A1) est dans une plage de 1 à 25.

4. Composition hydrofuge selon la revendication 1 ou 2, dans laquelle un rapport molaire B/(A1 + A2) du nombre de moles du groupe isocyanate dans le composé de polyisocyanate (B) à un nombre total de moles des groupes hydroxyle dans le composé de polyol (A1) et le composé de polyol (A2) dans le produit de réaction (AB) est dans une plage de 1 à 25.

5. Composition hydrofuge selon l'une quelconque des revendications 1 à 4, dans laquelle le groupe isocyanate dans une structure du produit de réaction (AB) est un groupe isocyanate bloqué.

6. Composition hydrofuge selon la revendication 5, dans laquelle le produit de réaction (AB) présente un groupe hydroxyle dans sa structure.

7. Composition hydrofuge selon l'une quelconque des revendications 1 à 6, dans laquelle le produit de réaction (AB) présente au moins un groupe choisi dans le groupe constitué d'un groupe hydrophile non ionique, d'un groupe hydrophile cationique et d'un groupe hydrophile anionique.

8. Composition hydrofuge selon l'une quelconque des revendications 1 à 7, comprenant un agent de réticulation (D).

9. Composition hydrofuge selon l'une quelconque des revendications 1 à 8, dans laquelle le composé conférant un caractère hydrofuge (C) inclut au moins un choisi dans le groupe constitué d'un composé de fluor présentant un groupe perfluoroalkyle présentant de 1 à 6 atomes de carbone, d'un composé non de fluor présentant un groupe hydrocarbure présentant de 7 à 40 atomes de carbone, et d'un composé à base de silicone présentant au moins un groupe alkyle présentant de 3 à 50 atomes de carbone.

10. Composition hydrofuge selon l'une quelconque des revendications 1 à 9, comprenant en outre un tensioactif.

11. Produit fibreux hydrofuge obtenu par traitement d'un produit fibreux avec la composition hydrofuge selon l'une quelconque des revendications 1 à 10.

12. Procédé de fabrication d'un produit fibreux hydrofuge, comprenant une étape consistant à mettre la composition hydrofuge selon l'une quelconque des revendications 1 à 10 en contact avec un produit fibreux.

13. Kit pour préparer une composition hydrofuge en mélangeant un premier agent et un second agent au moment de l'utilisation, le kit comprenant :
le premier agent contenant au moins un produit de réaction (AB) d'un composé de polyol (A) et d'un composé de polyisocyanate (B) ; et
le second agent, contenant au moins un composé hydrofuge (C),
dans lequel
le composé de polyol (A) est au moins un d'un composé de polyol (A1) présentant un ou plusieurs d'au moins un groupe fonctionnel choisi dans le groupe constitué d'un groupe éther, d'un groupe carbonate et d'un groupe ester, et d'un composé de polyol (A2) ne présentant aucun des groupes fonctionnels,
le produit de réaction (AB) présente un groupe isocyanate,
lorsque le composé de polyol (A) inclut uniquement le composé de polyol (A2) dans le produit de réaction (AB), un rapport molaire (B/A2) d'un groupe isocyanate dans le composé de polyisocyanate (B) à un groupe hydroxyle dans le composé de polyol (A2) est de 2,1 ou plus,
le composé hydrofuge (C) ne présente pas de groupe perfluoroalkyle présentant 7 atomes de carbone ou plus, et
un rapport massique (AB/C) du produit de réaction (AB) au composé conférant un caractère hydrofuge (C) est de 0,05 ou plus.

14. Kit selon la revendication 13, dans lequel le groupe isocyanate dans une structure du produit de réaction (AB) est un groupe isocyanate bloqué.

15. Kit selon la revendication 14, dans lequel le produit de réaction (AB) présente un groupe hydroxyle dans sa structure.
